# EUROPEAN PATENT SPECIFICATION

(11) **EP 3 771 314 B1**
(45) Date of publication and mention of the grant of the patent: **03.08.2022**
(21) Application number: 19818400.4
(22) Date of filing: 18.11.2019
(51) Int. Cl.: B60R 25/25, B60R 25/30, B60R 25/31, H04W 12/06, G06F 21/32

(54) **SEAMLESS DRIVER AUTHENTICATION USING AN IN-VEHICLE CAMERA IN CONJUNCTION WITH A TRUSTED MOBILE COMPUTING DEVICE**
NAHTLOSE FAHRERAUTHENTIFIZIERUNG UNTER VERWENDUNG EINER FAHRZEUGINTERNEN KAMERA IN VERBINDUNG MIT EINER VERTRAUENSWÜRDIGEN MOBILEN RECHENVORRICHTUNG
AUTHENTIFICATION DE CONDUCTEUR SANS INTERRUPTION À L'AIDE D'UNE CAMÉRA EMBARQUÉE CONJOINTEMENT AVEC UN DISPOSITIF INFORMATIQUE MOBILE DE CONFIANCE

(30) Priority: 17.06.2019 US 201962862581 P
(43) Date of publication of application: 03.02.2021
(73) Proprietor: Google LLC, Mountain View, CA 94043 (US)
(72) Inventor: SINGH, Hanumant Prasad R., Mountain View, CA 94043 (US); KULAGA, Piotr, Mountain View, CA 94043 (US); CHU, Wen-Sheng, Mountain View, CA 94043 (US); SENGUPTA, Kuntal, Mountain View, CA 94043 (US); JOHNSON, Joseph Edwin Jr., Mountain View, CA 94043 (US)
(74) Representative: Thorniley, Peter
(86) International application number: PCT/US2019/062035
(87) International publication number: WO 2020/256765

(56) References cited:
- EP-A1- 3 456 592
- CN-A- 108 790 743
- US-A1- 2019 071 055

## Description

### BACKGROUND

Vehicles, such as automobiles, motorcycles, aircraft, and watercraft, may include one or more computing systems for performing functions and providing occupants of the vehicles with information, entertainment, assistance, and/or environmental control. For instance, an automobile may include an entertainment system for playing music, videos, or other content, a navigation system for providing information and navigational assistance, a temperature control system for heating or cooling the in-vehicle cabin, a control system for adjusting various components or features of the car, such as a sun roof or window shades, or an "infotainment system" that performs some or all of these aforesaid functions. Modern vehicles are equipped with an infotainment head unit (IHU) having a display device (e.g., presence-sensitive display) and compute engine, which is configured to execute an operating system and one or more applications.

### SUMMARY

In general, the present application describes techniques for performing a seamless authentication of a driver of a vehicle using an in-vehicle camera and a trusted mobile computing device that is communicatively coupled to the vehicle. The trusted mobile computing device may initially perform an enrollment process to capture data (e.g., facial feature data associated with a captured image) of a face of a known user in a variety of different poses. The trusted device may assign each group of data of the known user to a respective pose bucket of a group of pose buckets. The trusted device enrolls the data by associating data of the known user with a user account for the known user. The trusted device may subsequently receive authentication data (e.g., computed test data, such as computed facial feature information) of an unknown user who is situated inside of the vehicle, where an authentication image is captured using the in-vehicle camera of the vehicle, and where computed data (e.g., feature data) is obtained from the image and used by the trusted device. The trusted device may authenticate the unknown user by comparing the authentication feature data for the unknown user to enrolled feature data of the known user. Based on the comparison, the trusted device sends a result of the authentication process to the vehicle, which may then perform login operations at the infotainment head unit of the vehicle that are customized for the authenticated user (e.g., based on that user's profile and/or account information). As a result, various of the described techniques enable a seamless and reliable authentication of a driver of a vehicle, while also storing enrollment feature data of authorized users only on the trusted device to protect the security of this user data. In some cases, the trusted mobile computing device may send the enrolled feature data to the vehicle computing system, which then may be configured to perform authentication of the unknown user in the vehicle by comparing the authentication feature data for the unknown user to the received enrolled feature data of the known user.

In one example, a method includes establishing, by a mobile computing device, a connection with a vehicle computing system of a vehicle, and, after establishing the connection, receiving, by the mobile computing device and from the vehicle computing system, first feature data associated with at least one image of a face of a user of the vehicle, wherein the at least one image of the face of the user of the vehicle is captured by an image capture device connected to at least a portion of the vehicle. The example method further includes determining, by the mobile computing device and based on a comparison between the first feature data and second feature data associated with at least one image of a face of a previously enrolled user of the mobile computing device, a match between the user of the vehicle and the previously enrolled user, authenticating, by the mobile computing device and based on the match, the user of the vehicle and sending, by mobile computing device and to the vehicle computing system, authentication data for the user of the vehicle, wherein the authentication data is indicative of the match.

In another example, not being part of the claimed invention, a computer-readable storage medium stores instructions that, when executed, cause at least one processor to: establish a connection with a vehicle computing system of a vehicle; after establishing the connection, receive, from the vehicle computing system, first feature data associated with at least one image of a face of a user of the vehicle, wherein the at least one image of the face of the user of the vehicle is captured by an image capture device connected to at least a portion of the vehicle; determine, based on a comparison between the first feature data and second feature data associated with at least one image of a face of a previously enrolled user of the mobile computing device, a match between the user of the vehicle and the previously enrolled user; authenticate, based on the match, the user of the vehicle; and send, to the vehicle computing system, authentication data for the user of the vehicle, wherein the authentication data is indicative of the match.

In another example, a mobile computing device includes at least one processor and at least one computer-readable storage device. The at least one computer-readable storage device store instructions that, when executed by the at least one processor, cause the at least one processor to: establish a connection with a vehicle computing system of a vehicle; after establishing the connection, receive, from the vehicle computing system, first feature data associated with at least one image of a face of a user of the vehicle, wherein the at least one image of the face of the user of the vehicle is captured by an image capture device connected to at least a portion of the vehicle; determine, based on a comparison between the first feature data and second feature data associated with at least one image of a face of a previously enrolled user of the mobile computing device, a match between the user of the vehicle and the previously enrolled user; authenticate, based on the match, the user of the vehicle; and send, to the vehicle computing system, authentication data for the user of the vehicle, wherein the authentication data is indicative of the match.

In another example, a method includes establishing, by a vehicle computing system of a vehicle, a connection with a mobile computing device, wherein the vehicle computing system includes an infotainment head unit, determining, by the vehicle computing system, a presence of a user inside the vehicle, and, after determining the presence of the user inside the vehicle, capturing, by the vehicle computing system using an image capture device that is connected to at least a portion of the vehicle, at least one image of a face of the user. The example method further includes determining, by the vehicle computing system, first feature data associated with the at least one image of the face of the user, receiving, by the vehicle computing system, authentication data for the user, wherein the authentication data indicates a match between the user and a previously enrolled user based on a comparison between the first feature data and second feature data associated with at least one image of a face of the previously enrolled user, and accessing, by the vehicle computing system and based on the authentication data for the user, user account information to log the user into the infotainment head unit.

In another example, not being part of the claimed invention, a computer-readable storage medium stores instructions that, when executed, cause at least one processor to: establish a connection with a mobile computing device; determine a presence of a user inside a vehicle; after determining the presence of the user inside the vehicle, capture, using an image capture device that is connected to at least a portion of the vehicle, at least one image of a face of the user; determine first feature data associated with the at least one image of the face of the user; receive authentication data for the user, wherein the authentication data indicates a match between the user and a previously enrolled user based on a comparison between the first feature data and second feature data associated with at least one image of a face of the previously enrolled user; and access, based on the authentication data for the user, user account information to log the user into a infotainment head unit.

In another example, a vehicle computing system includes at least one processor and at least one computer-readable storage device. The at least one computer-readable storage device store instructions that, when executed by the at least one processor, cause the at least one processor to: establish a connection with a mobile computing device, wherein the vehicle computing system includes an infotainment head unit; determine a presence of a user inside a vehicle; after determining the presence of the user inside the vehicle, capture, using an image capture device that is connected to at least a portion of the vehicle, at least one image of a face of the user; determine first feature data associated with the at least one image of the face of the user; receive authentication data for the user, wherein the authentication data indicates a match between the user and a previously enrolled user based on a comparison between the first feature data and second feature data associated with at least one image of a face of the previously enrolled user; and access, based on the authentication data for the user, user account information to log the user into the infotainment head unit.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating a side view of an interior of a vehicle that includes an example vehicle computing system that is configured to communicate with a mobile computing device for authenticating a user of a vehicle, in accordance with one or more aspects of the present disclosure.
FIG. 2 is a conceptual diagram illustrating further details of an interior of a vehicle, in accordance with one or more aspects of the present disclosure.
FIG. 3 is a conceptual diagram illustrating an example computing device that performs facial enrollment operations, in accordance with one or more aspects of the present disclosure.
FIG. 4 is a block diagram illustrating an example computing system, in accordance with one or more aspects of the present disclosure.
FIG. 5 is a diagram illustrating an example driver onboarding and authentication process, in accordance with one or more aspects of the present disclosure.
FIG. 6 is a diagram illustrating an example facial enrollment process, in accordance with one or more aspects of the present disclosure.
FIG. 7 is a flowchart illustrating example operations performed by an example computing system, in accordance with one or more aspects of the present disclosure.
FIG. 8 is a flowchart illustrating example operations performed by an example vehicle computing system, in accordance with one or more aspects of the present disclosure.

### DETAILED DESCRIPTION

As noted above, modern vehicles are equipped with an infotainment head unit (IHU) having a display device (e.g., presence-sensitive display) and a compute engine, which is configured to execute an operating system and one or more applications. The IHU enables a user to have a rich, personalized experience while driving, and the applications provided by the IHU may enable users to listen to preferred music, browse emails, or pick favored and/or frequent destinations, to name only a few examples. The user's personalized experience may be achieved by having user-specific profiles stored in per-user accounts on the IHU

In some cases, a key fob or an external device (e.g., mobile phone), which is paired with the vehicle at the time an account was initially created, may identify a user and log them in to the IHU. However, the mere presence of key fob or external device does not necessarily achieve the authentication of a particular, known or previously identified user of the vehicle. In certain cases, the IHU may further prompt the user of a known, trusted device to enter a personal passcode or password on the user's device to enable explicit permission for login into the IHU. This approach, however, may potentially negate the user's expectation of a seamless, "get-in-and drive" experience.

Modern automobiles support different levels of autonomous driving. Some automobiles use in-car cameras to monitor the driver's attentiveness, or to determine safe handoff to and from the autonomous mode. One approach is to leverage in-car cameras to provide face-based identification, similar to the face unlock feature on personal mobile devices. However, this face-based authentication process will typically involve an enrollment step, which may involve a user moving the user's face in a directed pattern in order for the camera to capture facial/biometric features of the user in different poses. Each pose may be associated with a distinct group of facial or other biometric features that are associated with that pose. Performing enrollment directly in a vehicle, using its own camera, may have certain challenges, as the user may not receive any visual or other directions from the vehicle for moving the user's head while at the same looking at the driver-facing camera.

The present application describes techniques for performing a seamless authentication of a driver of a vehicle using an in-vehicle camera and a trusted mobile computing device that is communicatively coupled to the vehicle. The techniques may provide a reliable authentication mechanism and a seamless user experience, while also ensuring user privacy of facial image information. The trusted mobile computing device may initially perform an enrollment process to capture image data (e.g., computed data such as facial feature data) of a face of a known user in a variety of different poses. As used herein, the term "image data" refers to data (e.g., feature data) that is computed or otherwise determined from a captured image of, e.g., a face of a user. The trusted device may assign each group of image data of the known user to a respective pose bucket of a group of pose buckets. The trusted device enrolls the image data by associating the image data of the known user with a user account for the known user. The trusted device may subsequently receive authentication image data (e.g., test image data, such as computed facial feature data associated with an image) of an unknown user who is situated inside of the vehicle, where the authentication image is captured using the in-vehicle camera of the vehicle, and where computed image data (e.g., feature data) is obtained from the image and used by the trusted device. The trusted device may authenticate the unknown user by comparing the authentication feature data for the unknown user to enrolled feature data of the known user. Based on the comparison, the trusted device sends a result of the authentication process to the vehicle, which may then perform login operations at the IHU that are customized for the authenticated user (e.g., based on that user's profile and/or account information). In some cases, the trusted mobile computing device may send the enrolled feature data to the vehicle computing system, which then may be configured to perform authentication of the unknown user in the vehicle by comparing the authentication feature data for the unknown user to the received enrolled feature data of the known user.

In some examples, the computing device may determine a pose bucket associated with authentication feature data of the unknown user's face, select feature data of the known user that is included in the same pose bucket as the pose bucket associated with the authentication feature data, and compare the selected feature data to the authentication feature data to determine whether the unknown user is the known user. As another example, the computing device may compare the authentication feature data to each of the groups of enrolled feature data to determine which of the enrolled feature data of the known user are most similar to the authentication feature data for the unknown user. The computing device may determine whether the unknown user is the known user based on the most similar enrolled feature data of the known user, regardless of the pose buckets.

By enrolling feature data included in several different pose buckets, the trusted device may more accurately perform facial recognition to authenticate an unknown user, such as the current user of a vehicle. For instance, enrolling feature data of a known user that are included in several pose buckets may increase the probability that the pose bucket associated with the authentication feature data (e.g., the pose of the unknown user's face) is similar to the pose buckets that include the enrolled feature data of the known user (e.g., the pose of the known user in the enrolled feature data). Increasing the probability that the pose of the authentication feature data of the unknown user is similar to the pose of one or more enrolled feature data of a known user may reduce the probability of falsely rejecting the unknown user when the unknown user is in fact a known, authorized user. In some instances, increasing the probability that the pose of the authentication feature data of the unknown user is similar to the pose of one or more enrolled feature data of a known user may reduce the probability of falsely accepting the unknown user when the unknown user is not a known, authorized user. In this way, the computing device may more accurately authenticate feature data of unknown users regardless of the pose of the unknown user.

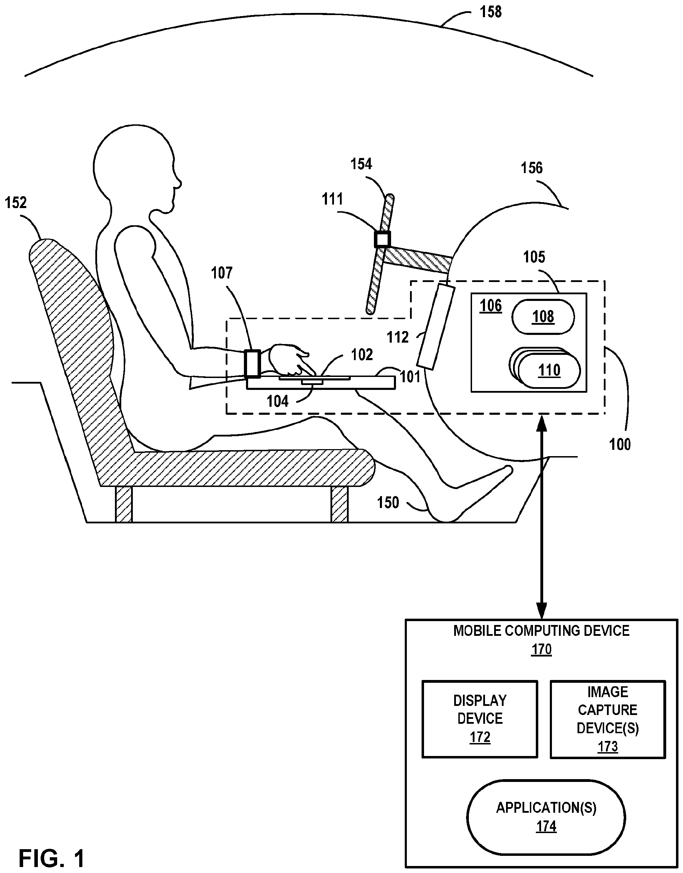

FIG. 1 is a conceptual diagram illustrating a side view of an interior of a vehicle (e.g., automobile), which includes an example vehicle computing system 100. FIG. 1 shows a cross-sectional view of a vehicle interior in addition to components of vehicle computing system 100. Vehicle computing system 100 is configured to detect and process user input.

The vehicle illustrated in FIG. 1 may be an automobile, but aspects of the present disclosure may also be applicable to other types of vehicles, including trucks, motorcycles, aircraft, watercraft, trains, or other vehicles. In FIG. 1, a driver 150 may normally occupy seat 152. Seat 152 of the automobile may be positioned directly behind steering wheel 154 of the vehicle such that an occupant of seat 152 may physically control steering wheel 154. The seat 152 is positioned within the vehicle illustrated in FIG. 1 under roof 158. Steering wheel 154 may protrude from dashboard 156. At least one front passenger seat may be laterally positioned adjacent to seat 152. Other passenger seats may be positioned behind seat 152 or in front of seat 152.

Also shown in FIG. 1 is a collection of devices, components, and modules that may each be included in vehicle computing system 100. Vehicle computing system 100 may include, but is not limited to, presence-sensitive panel 102 and camera 104, as well as display 112 and control unit 106. One or more components of vehicle computing system 100, such as presence-sensitive panel 102 and camera 104, may be directly and physically accessible to occupants seated in the front driver and front passenger seats of the automobile, and may be located within, near, or on center console 101. Such components may be within easy reach of such occupants, and may also or alternatively be positioned in another passenger area of the vehicle, such as a back seat. In some examples, a component may be within easy reach if a vehicle occupant does not need to change positions in his or her seat in order to reach the component with an outstretched arm. Stated another way, for many drivers, for example, the usual positions of the steering wheel, stick shift, and center console may be considered within easy reach of the driver. As further described below, presence-sensitive panel 102 and camera 104 may function as input devices for vehicle computing system 100. In some examples, one or more components of vehicle computing system 100 that might not necessarily require physical access by occupants of the vehicle (such as, in some examples, display 112 and control unit 106), may be positioned in or on or integrated into dashboard 156. Such components may be integrated as part of an automobile dashboard and/or console facing or near the occupants of the vehicle. As further described in this disclosure, vehicle computing system 100 may include display 112 that may output a graphical user interface. In some cases, additional cameras may be provided within the vehicle. For example, as shown in FIG. 1, steering wheel 154 may include a user-facing camera 111. In some cases, additional user-facing cameras may be positioned on other elements or components of the vehicle, such as on dashboard 156, roof 158, console 101 or panel 102, and/or display 112. In some cases, additional cameras may be positioned on a rear-view mirror or the windshield of the vehicle. In general, the in-car cameras (e.g., 104/111) may be mounted or otherwise connected to one or more portions or components of the vehicle.

Seated on seat 152 is user 150. User 150 may be a driver, but user 150 could also be a passenger or other vehicle occupant. Although in FIG. 1 user 150 is shown in a position that may often be considered a front seat (characterized, e.g., by steering wheel 154 and dashboard 156), user 150 may be seated in another location within the vehicle, including a back seat.

In the example of FIG. 1, user 150 may navigate or operate the vehicle, may interact with one or more components of the vehicle, and/or may provide input at input devices or presence-sensitive panel 102 or camera 104. In FIG. 1, user 150 is shown interacting with presence-sensitive panel 102.

Presence-sensitive panel 102 may detect one or more taps, gestures, and/or other user inputs at locations of presence-sensitive panel 102. Such taps, gestures, or other inputs may be from one or more fingers of user 150, or may be from a stylus or other device used by user 150. Such input may be on the surface of presence-sensitive panel 102, or within a threshold distance of the surface of presence-sensitive panel 102. In the illustration of FIG. 1, the threshold distance may extend above presence-sensitive panel 102, towards roof 158.

In response to detecting the one or more inputs at locations of presence-sensitive panel 102, presence-sensitive panel 102 may output to UI module 108 an indication of input detected by presence-sensitive panel 102. In some examples, UI module 108 may determine, based on the indication of input, information about the input. Such information may, for example, indicate one or more lines, characters, or shapes corresponding to the input. UI module 108 may output to one or more application modules 110 information about the input. In response to the information about the input, one or more application modules 110 may determine an operation corresponding to the input and/or perform an operation. In some examples, and in response to the information about the input, one or more application modules 110 may output to display 112 information about the input, the operation, or an operation to be performed.

As described and illustrated, some or all of vehicle computing system 100 may be housed within dashboard 156, which may in some examples be constructed of plastic, vinyl, rubber, aluminum, steel, or any other suitable material. Control unit 106 may include at least one processor and/or at least one storage device, and may be housed within housing 105, which may also be constructed of plastic, vinyl, rubber, aluminum, steel, or any other suitable material. In some examples, housing 105 may also be a rigid case that encloses and otherwise protects one or more electrical components that provide functionality for vehicle computing system 100. In some examples, housing 105 may be affixed, mounted or otherwise integrated with the automobile dashboard or console.

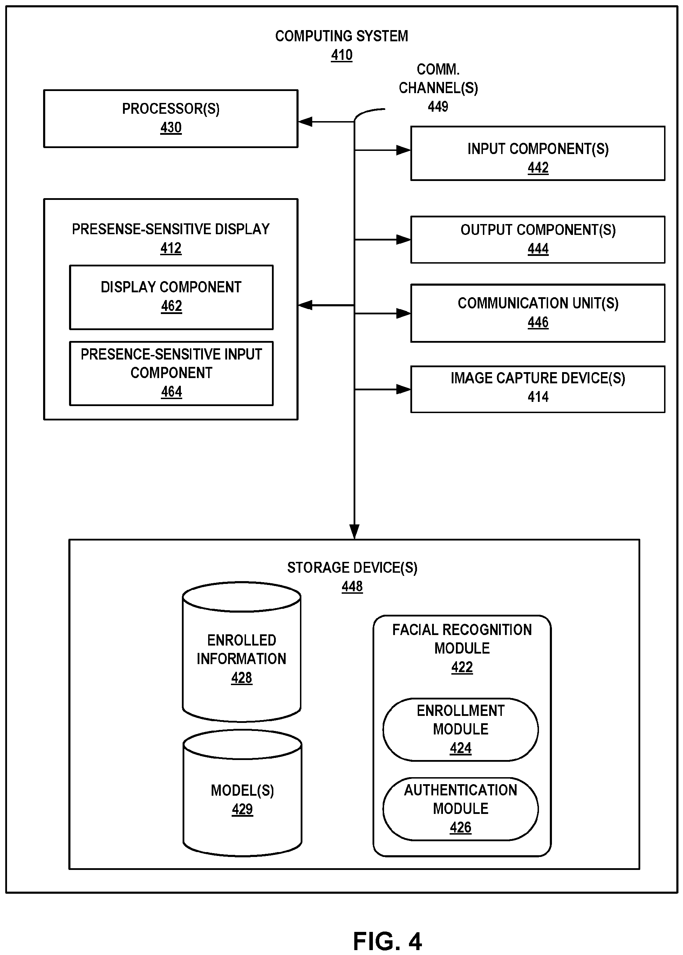

Control unit 106 may provide an operating environment or platform for one or one more modules, such as a combination of hardware, firmware, and software, as further illustrated in FIG. 4. For instance, control unit 106 may include one or more processors and storage devices that may execute instructions and store data of one or more modules. Control unit 106 may also be operably coupled to one or more other software and/or hardware components, including presence-sensitive panel 102, camera 104, and display 112 to control, configure, and/or communicate information with the components, to name only a few example operations.

Display 112 may function as an output device, such as a display device, using any one or more of a liquid crystal display (LCD), dot matrix display, light emitting diode (LED) display, organic light-emitting diode (OLED) display, e-ink, or similar monochrome or color display capable of outputting visible information to a user or vehicle occupant. In some examples, display 112 may also function as an input device, so that it serves as both an input and output device. In such examples, display 112 may include an integrated presence-sensitive input device and a display device. For instance, display 112 may function as a presence-sensitive input device using a presence-sensitive screen, such as a resistive touchscreen, a surface acoustic wave touchscreen, a capacitive touchscreen, a projective capacitance touchscreen, a pressure-sensitive screen, an acoustic pulse recognition touchscreen, or another presence-sensitive screen technology. Based on user input, display 112 may present output to a user. For instance, display 112 may present various user interfaces of applications (e.g., a navigation application) executing at vehicle computing system 100. An occupant of the vehicle, such as a driver, may provide user input to interact with one or more of such applications.

Vehicle computing system 100 may operate to assist, inform, entertain, or perform other tasks that require user interactions with occupants of a vehicle. Vehicle computing system 100 may, in some examples, be referred to as an infotainment head unit (IHU), an infotainment system, or a subcomponent thereof. For example, vehicle computing system 100 may include one or more application modules 110 that perform functions or process information, on behalf of one or more occupants of the vehicle. For instance, vehicle computing system 100 may provide a navigation service that provides directions to destinations. Vehicle computing system 100 may also provide an information retrieval service that provides information in response to queries and/or as preemptive assistance or recommendations. Vehicle computing system 100 may also provide vehicle data about the vehicle, or multimedia such as audio or video. Mentioned are only a few examples of the functionality that may be provided by vehicle computing system 100, and vehicle computing system 100 may provide many additional capabilities. In this and other ways, vehicle computing system 100 may improve the driving or riding experience for one or more occupants of the vehicle.

In some examples, vehicle computing system 100 may be controlled through input detected by presence-sensitive panel 102, through input detected by camera 104, and/or through input detected by a combination of presence-sensitive panel 102 and camera 104. Vehicle computing system 100 may also be controlled through input detected by one or more additional input devices (e.g., microphones, physical buttons or switches, or other types of input devices).

Presence-sensitive panel 102 may, in some examples, function simply as an input device for touch input, provided by user input that may occur directly and physically at presence-sensitive panel 102. For instance, presence-sensitive panel 102 may function as a multi-touch presence-sensitive input device using a presence-sensitive device, such as a resistive touchscreen or touch panel, a surface acoustic wave touchscreen or touch panel, a capacitive touchscreen or touch panel, a projective capacitance touchscreen or touch panel, a pressure-sensitive screen or touch panel, an acoustic pulse recognition touchscreen or touch panel, or another presence-sensitive screen or touch panel technology. In some examples, presence-sensitive panel 102 may detect an object at and/or near, or within range of the presence-sensitive component(s) associated with presence-sensitive panel 102. As one example range, presence-sensitive panel 102 may detect an object, such as a finger or stylus that is within 2 cm or less of presence-sensitive panel 102. Presence-sensitive panel 102 may determine a location (e.g., an (x,y) coordinate) of the presence-sensitive input device at which the object was detected. In another example range, presence-sensitive panel 102 may detect an object 6 inches or less from presence-sensitive panel 102; other ranges are also possible. Presence-sensitive panel 102 may detect a user's finger, stylus, or similar using capacitive, inductive, and/or optical recognition techniques.

In the example illustrated in FIG. 1, presence-sensitive panel 102 may be positioned in center console 101 above camera 104, and center console 101 may be transparent to camera 104 so that camera 104 may capture images directly above presence-sensitive panel 102 even though presence-sensitive panel 102 physically obscures the lens or field-of-view of camera 104. For example, camera 104 may be an infrared camera that captures images by receiving infrared light and presence-sensitive panel 102 may be transparent to infrared light such that camera 104 is able to receive the infrared light originating between the roof 158 and presence-sensitive panel 102. In other examples, camera 104 might not be positioned directly under presence-sensitive panel 102, and camera 104 may be positioned elsewhere within the vehicle. For example, as shown in FIG. 1, steering wheel 154 may include a user-facing camera 111. In some cases, additional user-facing cameras may be positioned on other elements or components of the vehicle, such as on dashboard 156, roof 158, console 101 or panel 102, and/or display 112.

In some examples, presence-sensitive panel 102 may function as both an input device and as an output device. In such examples, presence-sensitive panel 102 may include an integrated presence-sensitive input device and a display device, and could be any one or more of a liquid crystal display (LCD), dot matrix display, light emitting diode (LED) display, organic light-emitting diode (OLED) display, e-ink, or similar monochrome or color display capable of outputting visible information to a user or vehicle occupant. In other examples where presence-sensitive panel 102 includes both input device and output device functionality, presence-sensitive panel 102 may be implemented by two separate components: a presence-sensitive input device for receiving input and a display device for providing output. In examples where presence-sensitive panel 102 includes both input device and output device functionality, presence-sensitive panel 102 may still be positioned in center console 101 above camera 104, and center console 101 may still be transparent to camera 104 so that camera 104 may capture images directly above presence-sensitive panel 102, even if positioned under presence-sensitive panel 102.

Camera 104 and/or camera 111 may be one or more of any appropriate type of image acquisition or capture device, such as a camera or charge-coupled device. In some examples, camera 104 may be one or more infrared cameras with a high field-of-view and shallow depth of focus, and may be a backlit infrared camera oriented to point generally upward within the vehicle, having a particular field-of-view. In other examples, camera 104 may be or may further include one or more other types of cameras or image sensors, which may include one or more other infrared cameras, thermographic cameras, thermal imaging cameras, light-sensitive cameras, range sensors, tomography devices, radar devices, red-green-blue (RGB) cameras, or ultrasonic cameras. In some examples, camera 104 may be any image capture device appropriate for application of computer vision techniques. Depending on the type of sensors or cameras used, the resulting image may include two-dimensional images, three-dimensional volumes, or an image sequence. Pixel values typically correspond to light intensity in one or more spectral bands, but might also be related to various physical measures, such as depth, absorption or reflectance of sonic or electromagnetic waves, or nuclear magnetic resonance.

Camera 104 may be configured to capture movements of an occupant of the vehicle, such as a driver, as the occupant moves an arm, wrist, hand, stylus, and/or fingers as he or she gestures in, for example, a field-of-view, and may be configured to capture images of the face of user 150.

As described above, vehicle computing system 100 may include user interface (UI) module 108 and application modules 110. UI module 108 and application modules 110 may perform operations described herein using software, hardware, firmware, or a mixture of both hardware, software, and firmware residing in and executing by vehicle computing system 100 or at one or more other remote computing devices. As such, UI module 108 and application modules 110 may be implemented as hardware, software, and/or a combination of hardware and software. Vehicle computing system 100 may execute UI module 108, application modules 110, or one or more other modules as or within a virtual machine executing on underlying hardware. UI module 108 and application modules 110 may be implemented in various ways. For example, UI module 108 and application modules 110 may be implemented as a downloadable or pre-installed application or "app." In another example, UI module 108 and application modules 110 may be implemented as part of an operating system of vehicle computing system 100.

Application modules 110 may include functionality to perform any variety of operations on vehicle computing system 100. For instance, application modules 110 may include a navigation application, weather application, a phone dialer application, an information retrieval application, a multimedia application, a vehicle information application, an email application, a text messing application, instant messaging application, social networking application, weather application, stock market application, emergency alert application, sports application, to name only a few examples. In general, vehicle computing system 100, whether through application modules 110 or otherwise, may be configured to perform operations including those relating to climate control systems (e.g., heating and air conditioning), audio or infotainment systems, seat, window, sunshade, or windshield wipers, cruise control, in-cabin display system, steering wheel controls, headrest, arm rest, side or rear view mirrors, collision sensors. Such operations may be controlled by one or more application modules 110, or may be controlled by other systems within the vehicle. In some examples, such operations may be limited to non-safety features of the vehicle. In other examples, such operations may encompass one or more features of the vehicle that may be considered safety-related (e.g., turning on a turn-signal, adjusting a mirror, adjusting or fastening/disconnecting a seat belt, adjusting cruise control features, accelerating, braking).

Although shown as operable within control unit 106 of vehicle computing system 100, one or more of application modules 110 may be operable by a remote computing device (e.g., mobile computing device 170) that is communicatively coupled to vehicle computing system 100. In such examples, an application module executing at a remote computing device may cause the remote computing device to send the content and intent information using any suitable form of data communication (e.g., wired or wireless network, short-range wireless communication such as Near Field Communication or BLUETOOTH, etc.). In some examples, a remote computing device may be a computing device that is separate from a computing device included in vehicle computing system 100. For instance, the remote computing device may be operatively coupled to vehicle computing system 100 by a network. An example of a remote computing device may include, but is not limited to a server, smartphone, tablet computing device, smart watch, and desktop computer. In some examples, a remote computing device may or may not be an integrated component of vehicle computing system 100. As shown in FIG. 1, one such example remote device is mobile computing device 170, which may include a display device 172 and one or more image capture devices 173, and which may execute one or more applications 174. Examples of mobile computing device 170 may include, but are not limited to, a mobile phone, a tablet computer, a personal digital assistant (PDA), a laptop computer, a portable gaming device, a portable media player, an e-book reader, a wearable device (e.g., a watch, a wrist-mounted computing device, a head-mounted computing device), or other type of mobile computing device. Mobile computing device 170 may be or include one or more processors. FIG. 1 further illustrates a mobile, wearable device 107 (e.g., smartwatch), which is worn by user 150, and which may be communicatively coupled (e.g., via one or more wireless connections) to mobile computing device 170 and/or system 100. IHU system 100 may communicate with wearable device 107 and/or mobile computing device 170 using a wireless communication protocol (e.g., BLUETOOTH, WIFI, BLUETOOTH Low Energy (BLE)). When mobile computing device 170 and/or wearable device 107 is paired with IHU system 100, this device may be recognized as a trusted device with respect to IHU system 100, and is assigned a unique identifier by IHU system 100. This trusted device, and its corresponding unique identifier, are associated by IHU system 100 with user 150 of the vehicle, and any profile and/or account information for user 150.

UI module 108 of vehicle computing system 100 may receive from presence-sensitive panel 102 one or more indications of user input detected at presence-sensitive panel 102. Generally, each time presence-sensitive panel 102 detects user input at a particular location of presence-sensitive panel 102, UI module 108 may receive an indication of user input or information about the user input from presence-sensitive panel 102. UI module 108 may assemble the information received from presence-sensitive panel 102 into a set of one or more events, such as a sequence of one or more touch events or gesture events. Each gesture event in the sequence may include data or components that represent parameters (e.g., when, where, originating direction) characterizing a presence and/or movement of input at presence-sensitive panel 102. Each gesture event in the sequence may include a location component corresponding to a location of presence-sensitive panel 102, a time component related to when presence-sensitive panel 102 detected user input at the location, and/or an action component related to whether the gesture event corresponds to a lift up or a push down at the location.

UI module 108 may determine one or more characteristics of the user input based on the sequence of gesture events and include information about these one or more characteristics within each gesture event in the sequence of gesture events. For example, UI module 108 may determine a start location of the user input, an end location of the user input, a density of a portion of the user input, a speed of a portion of the user input, a direction of a portion of the user input, and a curvature of a portion of the user input. UI module 108 may transmit indications of user input from presence-sensitive panel 102 to other modules, such as application modules 110. UI module 108 may determine one or more single- or multi-touch gestures provided by a user. UI module 108 may also act as an intermediary between various components of vehicle computing system 100 to make determinations based on input detected by presence-sensitive panel 102 and generate output presented by display 112. For instance, UI module 108 may receive data from one or more application modules 110 and cause display 112 to output content, such as a graphical user interface, for display.

UI module 108 of vehicle computing system 100 may also receive from camera 104 one or more indications of user input detected by camera 104. Generally, each time camera 104 detects a user gesture or movement, UI module 108 may receive an indication of user input or information about the user input from camera 104. UI module 108 may assemble the information received from camera 104 into a set of one or more events, such as a sequence of movements or gesture events. Each gesture event in the sequence may include data or components that represents parameters (e.g., when, where in three dimensional space, originating direction, direction in three dimensional space, hand or arm orientation or posture) characterizing a presence, gesture, and/or movement captured by camera 104 within a field-of-view. Each gesture event in the sequence may include a location component corresponding to a three-dimensional location within a field-of-view, a time component related to when camera 104 detected user input within the three-dimensional space, an action component related to what type of gesture was made, and/or one or more images captured by camera 104.

Further, in some examples, the arrangement and/or placement of presence-sensitive panel 102 and camera 104 within the vehicle may provide an ergonomic and comfortable way for a driver (or other vehicle occupant) to interact with vehicle computing system 100. While presence-sensitive panel 102 and camera 104 may detect different types of input, the positioning of presence-sensitive panel 102 and camera 104 in accordance with one or more aspects of this disclosure may be such that input detected by presence-sensitive panel 102 may be perceived by a vehicle occupant to be a natural extension of input detected by camera 104. Similarly, input detected by camera 104 may be perceived by a vehicle occupant to be a natural extension of input detected by presence-sensitive panel 102. In other words, such a system may provide a particularly natural or easy user interface for a vehicle occupant to use. In some cases, a vehicle occupant may find interacting with vehicle computing system 100 to be relatively instinctive.

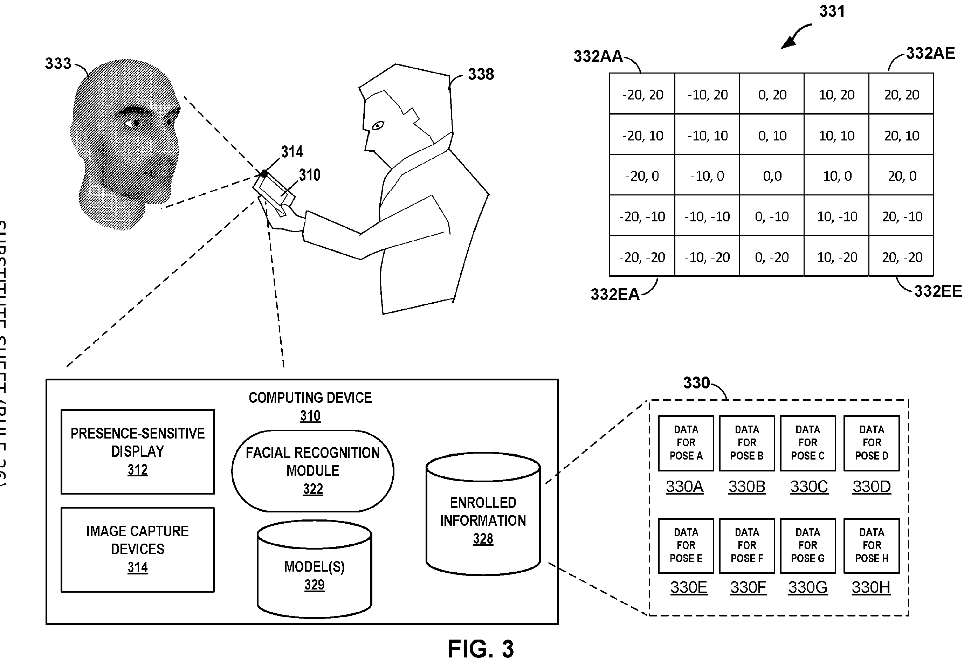

As described in further below, according to various examples, a mobile computing device (e.g., mobile computing device 170, wearable device 107) may establish a connection with vehicle computing system 100 of the vehicle illustrated in FIG. 1. After establishing the connection, the mobile computing device may receive, from vehicle computing system 100, first feature data associated with at least one image of a face of user 150 of the vehicle. The at least one image of the face of user 150 of the vehicle is captured by an image capture device (e.g., camera 104/111) connected to at least a portion of the vehicle. The mobile computing device may determine, based on a comparison between the first feature data and second feature data associated with at least one image of a face of a previously enrolled user of the mobile computing device, a match between the user of the vehicle and the previously enrolled user, as described further below in reference to FIG. 3. The mobile computing device authenticates, based on the match, user 150 of the vehicle. The mobile computing device the sends, to vehicle computing system 100, authentication data for user 150 of the vehicle, where the authentication data is indicative of the match.

According to various examples, vehicle computing system 100 may establish a connection with a mobile computing device (e.g., mobile computing device 170, wearable device 107), where the vehicle computing system includes an infotainment head unit, and determine a presence of a user inside the vehicle. After determining the presence of the user inside the vehicle, vehicle computing system 100 may capture, using an image capture device (e.g., camera 104/111) that is connected to at least a portion of the vehicle, at least one image of a face of the user, and determine first feature data associated with the at least one image of the face of the user. Vehicle computing system 100 may receive authentication data for the user, where the authentication data indicates a match between the user and a previously enrolled user based on a comparison between the first feature data and second feature data associated with at least one image of a face of the previously enrolled user. Vehicle computing system 100 may then access, based on the authentication data for the user, user account information to log the user into the infotainment head unit.

In some cases, vehicle computing system 100 may send, to the mobile computing device, the first feature data associated with the at least one image of the face of the user. After sending the first feature data, vehicle computing system 100 receives, from the mobile computing device, the authentication data for the user.

In other alternate cases, the trusted mobile computing device may send the enrolled feature data to vehicle computing system 100, which then may be configured to perform authentication of the unknown user in the vehicle by comparing the authentication feature data of the unknown user to the received enrolled feature data of a known user. In these cases, vehicle computing system 100 receives, from the mobile computing device, the second feature data associated with the at least one image of the face of the previously enrolled user, and compares the first feature data and the second feature data. Vehicle computing system 100 then determines, based on the comparing, the match between the user and the previously enrolled user, where the authentication data comprises an indication of the match.

Throughout the disclosure, examples are described where a computing device and/or a computing system analyzes information (e.g., facial image information, etc.) associated with a computing device and a user of a computing device, only if the computing device receives permission from the user of the computing device to analyze the information. For example, in situations discussed below, before a computing device or computing system can collect or may make use of information associated with a user, the user may be provided with an opportunity to provide input to control whether programs or features of the computing device and/or computing system can collect and make use of user information (e.g., information about a user's current location, current speed, etc.), or to dictate whether and/or how to the device and/or system may receive content that may be relevant to the user. In addition, certain data may be treated in one or more ways before it is stored or used by the computing device and/or computing system, so that personally identifiable information is removed. For example, a user's identity may be treated so that no personally identifiable information can be determined about the user, or a user's geographic location may be generalized where location information is obtained (such as to a city, ZIP code, or state level), so that a particular location of a user cannot be determined. Thus, the user may have control over how information is collected about the user and used by the computing device and computing system.

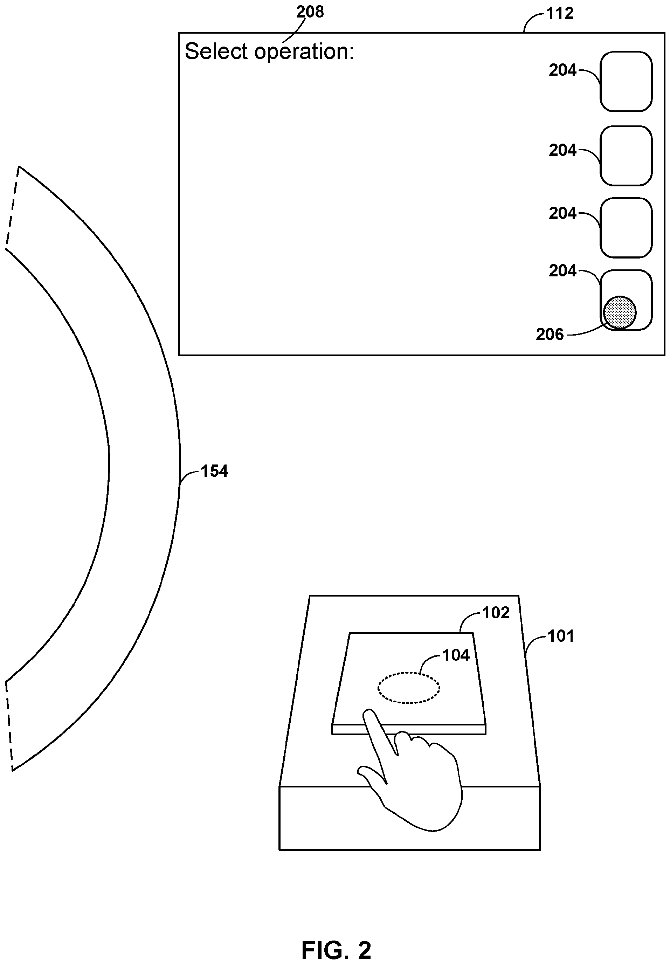

FIG. 2 is a conceptual diagram illustrating further details of an interior of a vehicle, in accordance with one or more aspects of the present disclosure. In FIG. 2, a portion of steering wheel 154 from FIG. 1 is shown, and a finger of user 150 is interacting with panel 102 of console 101. According to the techniques of the present disclosure, camera 104 has acquired facial images of user 150, and provided information associated with these images to mobile computing device 170. Mobile computing device 170 has authenticated user 150 based on a comparison of received facial feature data with stored facial feature data of authorized, known users stored by mobile computing device 170, to identify a match with the stored facial feature data of user 150. Mobile computing device 170 sends authentication data for user 150 to system 100. System 100 may send feature data to mobile computing device 170 that comprises actual image information or, in various examples, comprises feature data (e.g., feature vector data) for various features of the images of user 150 that are captured by image capture device 173.

In some examples, this authentication data may comprise a unique identifier associated with user 150 and/or mobile computing device 170. System 100 may use this received authentication data to access the user profile, user preference, login credentials, and/or account data for user 150 that is stored in system 100 (e.g., for logging user 150 into IHU system 100). System 100 may then display personalized or customized data display 112 of system 100 for user 150 based upon the accessed information (e.g., preferences) that are particular to user 150. This personalized information may include user interface elements 208 and 204. Cursor 206 may overlap one of user interface elements 204. When cursor 206 is over one of user interface elements 204, presence-sensitive panel 102 may detect one or more taps or inputs at presence-sensitive panel 102, and system 100 may determine, based on this input, that the input corresponds to selection of the user interface elements 204 overlapped by cursor 206.

In some examples, display 112 may be a presence-sensitive panel that operates both as an input device and an output device. In such an example, display 112 may detect one or more inputs at or near a location on display 112 where display 112 presents user interface element 204. System 100 may identify, based on the input, a selected user interface element 204 corresponding to the input. In response to the input selecting user interface element 204, system 100 may perform an operation, which may include displaying information or updating a graphical user interface at display 112. In some examples where presence-sensitive panel 102 also acts as a display, computing device 200 may additionally or alternatively display information at presence-sensitive panel 102 or update a graphical user interface displayed at presence-sensitive panel 102.

Display 112 of IHU system 100 may be configured to display personalized or customized information for any particular user that is authenticated by mobile computing device 170 that is communicatively coupled to system 100. Thus, if various different authorized users, including user 150, use the vehicle, display 112 may be configured to display different customized information for each user, depending on the setup of the user profile or account for each user that is authenticated by mobile computing device 170. In some cases, system 100 may also customize various other settings of vehicle that are associated with operation of the vehicle and/or IHU system 100 (e.g., temperature settings, radio settings, vehicle environment settings, etc.).

FIG. 3 is a conceptual diagram illustrating an example computing device 310 that performs facial enrollment operations, in accordance with one or more aspects of the present disclosure. Computing device 310 may be one example of mobile computing device 170 shown in FIG. 1 that is configured to save enrolled image data of authorized users. As used herein, the term "image data" refers to data (e.g., feature data) that is computed or otherwise determined from a captured image of, e.g., a face of a user.

Computing device 310 may be a mobile device, such as a smart phone, a tablet computer, a laptop computer, computerized watch, computerized eyewear, computerized gloves, or any other type of portable computing device. Additional examples of computing device 310 include other mobile and non-mobile devices, such as desktop computers, televisions, personal digital assistants (PDA), portable and non-portable gaming systems, digital media players or micro-consoles, e-book readers, mobile television platforms, automobile navigation and entertainment systems, or any other types of wearable and non-wearable, mobile or non-mobile computing devices.

As shown in FIG. 3, computing device 310 includes a presence-sensitive display (PSD) 312, one or more image capture devices 314, facial recognition module (FRM) 322, and enrolled information 328. Enrolled information 328 may comprise a data store. FRM 322 may perform operations described using software, hardware, firmware, or a mixture of hardware, software, and firmware residing in and/or executing at computing device 310. Computing device 310 may execute FRM 322 with multiple processors or multiple devices. Computing device 310 may execute FRM 322 as a virtual machine executing on underlying hardware. FRM 322 may execute as one or more services of an operating system or computing platform. FRM 322 may execute as one or more executable programs at an application layer of a computing platform.

PSD 312 of computing device 310 may function as respective input and/or output devices for computing device 310. PSD 312 may be implemented using various technologies. For instance, PSD 312 may function as input devices using presence-sensitive input screens, such as resistive touchscreens, surface acoustic wave touchscreens, capacitive touchscreens, projective capacitance touchscreens, pressure sensitive screens, acoustic pulse recognition touchscreens, or another presence-sensitive display technology. PSD 312 may detect input from a user of computing device 310. For example, PSD 312 may detect one or more gestures performed on or within a threshold distance of PSD 312 (e.g., a user touching PSD 312 with a finger or a stylus or moving the finger or stylus within a threshold distance of a surface of PSD 312).

PSD 312 may also function as output (e.g., display) devices using any one or more display devices, such as liquid crystal displays (LCD), dot matrix displays, light emitting diode (LED) displays, organic light-emitting diode (OLED) displays, e-ink, or similar monochrome or color displays capable of outputting visible information to a user of computing device 310. PSD 312 may output information (e.g., to a user) as a user interface (e.g., a graphical user interface), which may be associated with functionality provided by computing device 310. For example, PSD 312 may display various user interfaces related to an application module or other features of computing platforms, operating systems, applications, and/or services executing at or accessible from computing device 310.

Image capture devices 314 may be one example of image capture devices 173 (FIG. 1) and may include one or more cameras, such as digital cameras, still cameras, motion picture cameras, and the like. Image capture devices 314 may include any other devices capable of capturing and storing still or moving images. In some examples, image capture devices 314 may be capable of digitally recording images via an electronic image sensor. Image capture devices 314 may be configured to generate data indicative of an image in response to detecting visible light (e.g., light visible by humans, with wavelengths between approximately 380 nanometers to approximately 740 nanometers) or near infrared (NIR) light (e.g., light adjacent to the visible light spectrum, such as light with wavelengths between approximately 750 nanometers and approximately 3400 nanometers). In some examples, computing device 310 includes an image capture device 314 configured to generate data indicative of 2-dimensional images. In another example, computing device 310 includes a plurality of image capture device 314 configured to generate data indicative of 3-dimensional images. In this way, a plurality of image capture devices 314 may generate data indicative of 2-dimensional images, 3-dimensional images, or both.

In accordance with techniques of this disclosure, FRM 322 may perform facial recognition to authenticate a user of computing device 310. In general, FRM 322 may perform an enrollment process (e.g., one time, such as during an initial setup of computing device 310) and periodically execute an authentication process to determine whether an unknown user is, in fact, a known user. During the enrollment process, image capture devices 314 may determine one or more feature data 330A-330H (collectively, "feature data 330" or, more generally, "image data 330") of a known user 338 (e.g., a user logged in to a user account associated) and PSD 312 may output a graphical user interface (GUI) that includes one or more images 333 of the known user 338. Known user 338 may also be referred to as an enrolled user. In some examples, each of feature data 330 may be associated with a particular pose of user 338 (e.g., feature data 330A for a "pose A" of user 338, feature data 330B for a "pose B" of user 338). Known user 338 may be able to view images 333 within the GUI as data is captured by image captures devices 314, and may adjust his or her head and/or computing device 310 to enable image capture devices 314 to capture images 333 of the face of known user 338 in a variety of different poses. Image capture devices 314 may output data associated with images 333 to FRM 322. As one example, user 338 may face image capture devices 314 and press a button (e.g., a physical button or a graphical button displayed by PSD 312) to cause image captures devices 314 to capture images 333. As another example, image capture devices 314 may automatically capture images 333 in response to the user facing image capture devices 314.

FRM 322 analyzes the data received from image capture devices 314 and assigns each of computed feature data 330 to one or more pose buckets 332AA-332EE (collectively, pose buckets 332). Feature data 330 comprises features or characteristics of images 333. Each pose bucket 332 is associated with a range of pitch angles (also referred as tilt angle) and yaw angles (also referred to as a pan angle) of the user's face. As used herein, the pitch angle refers to an angle of the user's face relative to a horizontal axis and the yaw angle refers to an angle of the user's face relative to a vertical axis that is perpendicular to the horizontal axis. For example, each of pose buckets 332 may be associated with a respective yaw and pitch range. In the example of FIG. 3, the size of each of pose buckets 332 is equal (e.g., 10 degrees). For example, each of pose buckets 332 is associated with a 10-degree range of pitch angles and a 10-degree range of yaw angles. However, in some examples, the size of pose buckets 332 may be different. For example, pose bucket may associated with an 8-degree range of pitch angles (and/or range of yaw angles) and another pose bucket may be associated with a 10-degree range of pitch angles (and/or range of yaw angles).

For purposes of illustration, pose buckets 332 are shown in FIG. 3 as part of a table 331. As illustrated in the example of FIG. 3, the yaw and pitch angles shown in table 331 represent the center of each respective pose bucket 332. For example, the center of pose bucket 332AA is -20 degrees in yaw and 20 degrees in pitch. In other words, the pose bucket 332AA may represent -15 to -25 degrees in yaw, and 15 to 25 degrees in pitch. Similarly, in the example of FIG. 3, the center of pose bucket 332AN is 20 degrees in yaw and 20 degrees in pitch, such that pose bucket 332AN represents 15 degrees to 25 degrees in yaw and 15 degrees to 25 degrees in pitch. While table 331 includes 25 pose buckets 332, in some examples, table 331 may include a different number of pose buckets 332. While pose buckets 332 are illustrated as part of a table 331 to aid understanding, pose buckets 332 may not be stored in a table. Pose buckets 332 may be stored in any data structure and may be organized in any manner.

FRM 322 may determine which of pose buckets 332 is associated with feature data based on characteristics or landmarks of the face of known user 338 included in the data for images 333. For instance, FRM 322 may detect landmarks in images 333 of the user's face, such as the user's eyes, nose, and mouth, and may determine the yaw and pitch angles of the user's face based on the landmarks. For example, FRM 322 may determine that feature data 330A, which is associated with a particular pose (e.g., "POSE A"), should be included in pose bucket 332CC based on the yaw and pitch angles of the user's face in feature data 330A, and the range yaw and pitch angles associated with pose bucket 332CC. For instance, FRM 322 may determine that the yaw angle of the user's face in feature data 330A is 0 degrees and the pitch angle of the known user's face is 0 degrees. FRM 322 may determine that pose bucket 332CC is associated with a range of yaw angles from -5 to 5 degrees and a range of pitch angles from -5 degrees to 5 degrees (e.g., pose bucket 332CC is centered at 0 degrees yaw and 0 degrees pitch). In such examples, FRM 322 may determine that pose bucket 332CC includes feature data 330A in response to determining that the yaw and pitch angle of the user's face in feature data 330A falls within the range of yaw and pitch angles associated with pose bucket 332CC.

As another example, FRM 322 may determine the yaw angle of user's face in feature data 330B is 0 degrees (e.g., centered in the left and right directions) and the pitch angle of the user's face is 23 degrees (e.g., the known user is looking up). FRM 322 may determine that pose bucket 332AC is associated with a range of yaw angles from -5 to 5 degrees and a range of pitch angles from 15 degrees to 25 degrees (e.g., pose bucket 332CC is centered at 0 degrees yaw and 20 degrees pitch). In such examples, FRM 322 may determine that pose bucket 332AC includes feature data 330B in response to determining that the yaw and pitch angle of the user's face in feature data 330B falls within the range of yaw and pitch angles associated with pose bucket 332AC.

FRM 322 may determine feature data 330 and determine whether a threshold number of pose buckets 332 include one of feature data 330. For example, FRM 322 may determine a number of pose buckets 332 that include feature data 330 of the face of the known user. In the example of FIG. 3, FRM 322 determines that feature data 330 are included within 19 pose buckets (e.g., 332AB, 332AC, 332BA, 332BB, 332BC, 332BD, 332BE, 332CA, 332CB, 332CC, 332CD, 332CE, 332DB, 332DC, 332DD, 332DE, 332EB, 332EC, and 332ED) of 25 possible pose buckets 332. In some examples, FRM 322 determines whether the number of pose buckets that include feature data 330 satisfies (e.g., is greater than or equal to) a threshold number (e.g., 15 pose buckets, 17 pose buckets, 19 pose buckets, etc.; or 65% of pose buckets 332, 75% of pose buckets 332, 85% of pose buckets 332, etc.). For example, FRM 322 may determine that the number of pose buckets 332 that include feature data 330 satisfies the threshold number of pose buckets in response to determining that feature data 330 are included within at least 75% of pose buckets 332. Determining the number of pose buckets 332 that include feature data 330 satisfies the threshold number of pose buckets may indicate that feature data 330 represent the face of the known user in enough different poses to more accurately authenticate a user.

Responsive to determining that the number of pose buckets that include feature data 330 does not satisfy the threshold number of pose buckets, image capture device 314 may capture one or more images 333 for the enrollment process. For example, FRM 322 may output a graphical user interface instructing known user 338 to move his or her head to capture images 333 of different angles of the face of known user 338.

Responsive to determining that the number of pose buckets that include feature data 330 satisfies the threshold number of pose buckets, FRM 322 may associate feature data 330 with a user account for known user 338. In some examples, feature data 330 may include image templates (also referred to as embeddings) for each respective image. As one example, an image template may generally correspond to a statistical model of one or more features (e.g., biometric features) of a user's face. For example, FRM 322 may generate an image template that includes a vector with a plurality of element values (e.g., 50 values, 100 values, 500 values, etc.). In some examples, each element value of the vector corresponds to a feature of the user's face (e.g., distance between the eyes, nose shape, etc.). Alternatively or additionally, element values of the vector may be generated through a, e.g., non-linear machine learned model trained to generate outputs indicative of a facial identity. For example, FRM 322 may apply a trained facial recognition model to the plurality of feature data 330 and output an image template (e.g., embedding) for each respective feature data 330 as a vector. In some examples, FRM 322 associates feature data 330 with the user account by assigning data to an image template identifier and associating the respective image template identifier with a user account identifier for the user account for known user 338.

FRM 322 may feature data image in enrolled information 328, which comprises a data store that includes feature data 330 associated with images 333 of user 338. In some examples, FRM 322 encrypts feature data 330 prior to storing it in enrolled information 328. In some examples, enrolled information 328 may be stored locally on computing device 310 such that the information is not transmitted over a network to any other devices (e.g., not transmitted to system 100 of the vehicle of FIG. 1). Further, computing device 310 may provide the user with an opportunity to delete one or more portions of feature data 330 stored in enrolled information.

FRM 322 may perform an authentication process for an unknown user (e.g., user 150 of the vehicle of FIG. 1) after completing the enrollment process for known user 338. In other words, FRM 322 may receive a request to authenticate an unknown user 150 of the vehicle of FIG. 1, based on feature data of user 150 that is determined from images 333 captured by one of cameras in the vehicle (e.g., camera 104 and/or 111), and which is transmitted by IHU system 100 to computing device 310, which may be one example of mobile computing device 170 of FIG. 1. System 100 may send feature data 330 to computing device 310 that comprises, e.g., feature vector data for various features of the images of user 150 that are captured by image capture device 173.

Responsive to receiving or determining feature data associated with the authentication image, FRM 322 may determine whether unknown user 150 is known user 338. In some examples, FRM 322 determines whether the unknown user 150 is the known user 338 based on a comparison of the feature data indicative of authentication images of the face of unknown user 150 and the feature data 330 indicative of images 333 of the face of the known user 338. For example, FRM 322 may compare the feature data indicative of the authentication image(s) of the face of unknown user 150 and feature data 330 that is computed or determined from images 333 of the face of the known user 338 using a pose-independent (also referred to as pose invariant) technique or a pose-dependent technique.

In some examples, in a pose-dependent technique, FRM 322 determines whether the unknown user 150 is the known user 338 based on the authentication feature data and feature data 330 associated with the face of the known user 338 in a pose closest to the pose of the face of the unknown user in authentication image of user 150. In one example, FRM 322 determines a pose bucket of pose buckets 332 associated with authentication feature data of unknown user 150. For example, FRM 322 may determine the pose bucket associated with feature data of unknown user 150 based on characteristics or landmarks of the face of the unknown user, in a manner similar to determining the pose buckets associated with feature data 330. For instance, FRM 322 may determine the yaw angle and the pitch angle of the face in the authentication feature data of user 150. Responsive to determining the yaw and pitch angles of the face in the authentication feature data, FRM 322 may determine which of pose buckets 332 include the yaw and pitch angle of the face in the authentication feature data. For instance, FRM 322 may determine the yaw and pitch angles of the face in the feature data are 20 degrees and 0 degrees respectively. FRM 322 may determine that pose bucket 332CD is associated with a range of yaw angles from 15 to 25 degrees yaw and a range of pitch angles from -5 to 5 degrees. In such instances, FRM 322 may determine that the authentication feature data of the unknown user 150 is associated with pose bucket 332CD in response to determining the yaw and pitch angles of the face in the authentication feature data are included in the range of yaw and pitch angles associated with pose bucket 332CD.

FRM 322 may determine feature data from feature data 330 of the face of the known user 338 that is included within the pose bucket associated with the feature data of the face of the unknown user 150. In other words, FRM 322 may determine which of feature data 330 has the closest pose to the pose of the authentication feature data of user 150. In one example, FRM 322 determines that the feature data of user 150 is associated with pose bucket 332CD and selects feature data (e.g., feature data 330G for a pose G) of feature data 330 that is included within pose bucket 332CD. FRM 322 may determine whether user 150 is the known user 338 by determining a similarity score for the selected feature data 330G, the similarity score indicating a similarity between feature data 330G and the authentication feature data.

Responsive to determining the similarity score for selected feature data 330G (e.g., the feature data included in the pose bucket 332CD that is associated with one or more images of the unknown user 150), in some examples, FRM 322 determines whether the similarity score for feature data 330G satisfies (e.g., is greater than or equal to) a threshold similarity score. FRM 322 may determine unknown user 150 is the known user 338 in response to determining that the similarity score for feature data 330G satisfies the threshold similarity score, and may determine that unknown user 150 is not the known user in response to determining that the similarity score for feature data 330G does not satisfy the threshold similarity score.

In some examples, FRM 322 determines whether unknown user 150 is the known user 338 regardless of the pose. In other words, in some examples, FRM 322 utilizes pose invariant techniques to determine whether the unknown user 150 is the known user 338. For example, FRM 322 may determine a respective similarity score for each feature data of feature data 330, where the respective similarity score indicates a similarity between the corresponding feature data of feature data 330 and the authentication feature data of unknown user 150.

In one scenario, FRM 322 selects feature data of feature data 330 based on the respective similarity scores for feature data 330 to determine whether unknown user 150 is the known user 338. FRM 322 selects the feature data of feature data 330 with the similarity score indicative of a closest match to the authentication feature data. The score indicative of the closest match may be the lowest similarity score or the highest similarity score.

In some scenarios, FRM 322 selects two or more feature data of feature data 330 based on the respective similarity scores to determine whether unknown user 150 is the known user 338. In one scenario, FRM 322 determines a composite similarity score for two or more feature data 330. For instance, FRM 322 may determine the composite similarity score based on the average of the respective similarity scores for two or more of feature data 330 and may compare the composite similarity score to the threshold similarity score to determine whether unknown user 150 is the known user 338.

As another example, FRM 322 may compare each respective similarity score for the two or more feature data to the threshold similarity score. In such examples, FRM 322 may determine that unknown user 150 is the known user 338 in response to determining that a threshold number (e.g., 100%, 80%, 60% etc.) of the selected feature data have a similarity score that satisfies the threshold similarity score. For instance, if the set of selected feature data include three feature data of feature data 330 with the highest similarity scores, in some examples, FRM 322 determines that unknown user 150 is the known user 338 in response to determining that the similarity score for two of the three selected feature data satisfies the threshold similarity score.

Responsive to determining that unknown user 150 is the known user 338, computing device 310 may send authentication data to IHU system 100 of the vehicle. For example, computing device 310 may send data indicative of a successful authentication of unknown user 150 as the known user 338, thereby indicating authentication of user 150. In some cases, computing device 310 may send user profile and/or account information that is customized or personalized for user 338 (e.g., authenticated user 150) to system 100. In some cases, computing device 310 may also send a unique identifier of user 338 and/or of computing device 310 to system 100 of the vehicle.

In some cases, computing device 310 may also store one or more models 329. For instance, in some cases, computing device 310 may utilize deep learning models to extract facial landmarks that help in identifying an individual, as described above. These models may be tailored to execute on the dedicated neural engines or processors of the personal devices. As described above, in some examples, an image template may generally correspond to a statistical model of one or more features (e.g., biometric features) of a user's face. For example, FRM 322 may generate an image template that includes a vector with a plurality of element values (e.g., 50 values, 100 values, 500 values, etc.). In some examples, each element value of the vector corresponds to a feature of the user's face (e.g., distance between the eyes, nose shape, etc.). Alternatively or additionally, element values of the vector may be generated through a, e.g., non-linear machine learned model trained to generate outputs indicative of a facial identity. For example, FRM 322 may apply a trained facial recognition model to images 333 and output an image template (e.g., embedding) for respective feature data 330 as a vector. Alternatively or additionally, element values of the vector may be generated through a non-linear machine learned model trained to generate outputs indicative of a facial identity. As one example, an enrollment module may apply a trained facial recognition model to images 333 and output an image template (e.g., a vector) for respective feature data 330. Such an image template may be represented as a vector and may be generated by a trained facial recognition model. The vector may include a plurality of element values that each correspond to a respective feature of the user's face (e.g., distance between the eyes, nose shape, etc.).

While computing device 310 is described as enrolling feature data 330 of a known user 338 and authenticating an unknown user 150, in some examples, one or more remote computing devices may perform all or a subset of the functionality described herein. In certain alternate examples, computing device 310 may send the enrolled feature data to a vehicle computing system (e.g., vehicle computing system 100), which then may be configured to perform authentication of an unknown user in the vehicle by comparing the authentication feature data of the unknown user to the received enrolled feature data of the known user.

In some examples, a computing device (e.g., computing device 310 or another computing device) may utilize user data associated with a user of computing device 310 only if the computing device receives permission from the user of the computing device to utilize the data. For example, before a computing device or computing system can collect or may make use of information associated with a user, the user may be provided with an opportunity to provide input to control whether programs or features of the computing device and/or computing system can collect and make use of user information. In addition, certain information may be treated in one or more ways before it is stored or used by the computing device and/or computing system, so that personally identifiable information is removed. For example, a user's identity may be treated so that no personally identifiable information can be determined about the user. For instance, the computing device may store feature data and/or an image template for an image without storing the image itself, and may associate the feature data and/or image template with a user identifier that is not associated with any other user information. Thus, the user may have control over how information is collected about the user and used by the computing device and computing system.

In this way, techniques of this disclosure may enable computing device 310 to capture feature data of a known user 338 that are included within several different pose buckets. By capturing and enrolling feature data in several different pose buckets, computing device 310 may increase the number of pose buckets that include feature data of the known user 338, which may enable computing device 310 may more accurately authenticate feature data of unknown users regardless of the pose bucket of an authentication feature data for the unknown user (e.g., user 150). For instance, increasing the number of pose buckets that include enrolled feature data may increase the probability that the pose bucket associated with the authentication feature data of the unknown user is similar to the pose bucket that includes one or more of the group of enrolled feature data of the known user 338, which may reduce the probability of falsely rejecting the unknown user when the unknown user is in fact a known, authorized user, thus potentially improving the user experience. Further, reducing the probability of false rejections may reduce the number of authentication attempts (e.g., facial recognition, finger print recognition, PIN or passcodes, etc.) used for the computing device to enter an increased access mode, which may reduce the amount of processing cycles utilized by the processor and improve battery life. In some instance, the described techniques may reduce the probability of falsely authenticating the unknown user when the unknown user is not a known, authorized user, which may increase security of computing device 310.

FIG. 4 is a block diagram illustrating an example computing system 410, in accordance with one or more aspects of the present disclosure. Computing system 410 may, in some cases, be a more detailed example of computing device 310 of FIG. 3, mobile computing device 170 of FIG. 1, and/or of vehicle computing system 100 of FIG. 1. FIG. 4 illustrates only one particular example of computing system 410, and many other examples of computing system 410 may be used in other instances and may include a subset of the components included in example computing system 410 or may include additional components not shown in FIG. 4. As used herein, the term "image data" refers to data (e.g., feature data) that is computed or otherwise determined from a captured image of, e.g., a face of a user.

As shown in the example of FIG. 4, computing system 410 includes PSD 412, one or more image capture devices 414, one or more processors 430, one or more input components 442, one or more output components 444, one or more communication units 446, and one or more storage devices 448. Storage devices 448 of computing system 410 include FRM 422 and enrolled information 428.

Communication channels 449 may interconnect each of the components 412, 414, 430, 442, 444, 446, and/or 448 for inter-component communications (physically, communicatively, and/or operatively). In some examples, communication channels 449 may include a system bus, a network connection, one or more inter-process communication data structures, or any other components for communicating data (also referred to as information).

Image capture devices 414 may include one or more cameras, such as digital cameras, still cameras, motion picture cameras, and the like. Image capture devices 414 may include any other devices capable of capturing and storing still or moving images. In some examples, image capture devices 414 may be capable of digitally recording images via an electronic image sensor. Image capture devices 414 may include one or more devices configured to detect visible light (e.g., visible light cameras), one or more devices configured to detect near-infrared light (e.g., near-infrared cameras), or a combination therein. In some examples, image capture devices 414 may generate image data indicative of 2-dimensional images, data indicative of 3-dimensional images, or a combination therein. In this way, a plurality of image capture devices 414 may capture visible light, near-infrared light, or a combination therein, and may generate image data indicative of 2-dimensional images, 3-dimensional images, or both.

One or more communication units 446 of computing system 410 may communicate with external devices by transmitting and/or receiving data. For example, computing system 410 may use one or more of communication units 446 to transmit and/or receive radio signals on a radio network such as a cellular radio network. In some examples, communication units 446 may transmit and/or receive satellite signals on a satellite network such as a Global Positioning System (GPS) network. Examples of communication units 446 include a network interface card (e.g. such as an Ethernet card), an optical transceiver, a radio frequency transceiver, a GPS receiver, or any other type of device that can send and/or receive information. Other examples of communication units 446 may include short wave radios (e.g., NFC, BLUETOOTH (including BLE)), GPS, 3G, 4G, 5G, and WIFI radios found in mobile devices as well as Universal Serial Bus (USB) controllers and the like.

One or more input components 442 of computing system 410 may receive input. Examples of input are tactile, audio, kinetic, and optical input, to name only a few examples. Input components 442 of computing system 410 include, in one example, a mouse, keyboard, voice responsive system, video camera, buttons, control pad, microphone or any other type of device for detecting input from a human or machine. In some examples, input component 442 may be a presence-sensitive input component, which may include a presence-sensitive screen, touch-sensitive screen, etc.

One or more output components 444 of computing system 410 may generate output. Examples of output are tactile, audio, and video output. Output components 444 of computing system 410, in some examples, include a presence-sensitive screen, sound card, video graphics adapter card, speaker, cathode ray tube (CRT) monitor, liquid crystal display (LCD), or any other type of device for generating output to a human or machine. Output components may include display components such as cathode ray tube (CRT) monitor, liquid crystal display (LCD), Light-Emitting Diode (LED) or any other type of device for generating tactile, audio, and/or visual output.

In some examples, PSD 412 of computing system 410 may include functionality of input component 442 and/or output components 444. In the example of FIG. 4, PSD 412 may include a presence-sensitive input component 464, such as a presence-sensitive screen or touch-sensitive screen. In some examples, presence-sensitive input component 464 may detect an object at and/or near the presence-sensitive input component. As one example range, presence-sensitive input component 464 may detect an object, such as a finger or stylus that is within two inches or less of presence-sensitive input component 464. Presence-sensitive input component 464 may determine a location (e.g., an (x,y) coordinate) of the presence-sensitive input component at which the object was detected. In another example range, presence-sensitive input component 464 may detect an object two inches or less from presence-sensitive input component 464 and other ranges are also possible. Presence-sensitive input component 464 may determine the location of presence-sensitive input component 464 selected by a user's finger using capacitive, inductive, and/or optical recognition techniques.

In some examples, PSD 412 may also provide output to a user using tactile, audio, or video stimuli as described with respect to output component 444. For instance, PSD 412 may include display component 462 that displays a graphical user interface. Display component 462 may be any type of output component that provides visual output, such as described with respect to output components 444. While illustrated as an integrated component of computing system 410, PSD 412 may, in some examples, be an external component that shares a data or information path with other components of computing system 410 for transmitting and/or receiving input and output. For instance, PSD 412 may be a built-in component of computing system 410 located within and physically connected to the external packaging of computing system 410 (e.g., a screen on a mobile phone). In another example, PSD 412 may be an external component of computing system 410 located outside and physically separated from the packaging of computing system 410 (e.g., a monitor, a projector, etc. that shares a wired and/or wireless data path with a tablet computer). In some examples, PSD 412, when located outside of and physically separated from the packaging of computing system 410, may be implemented by two separate components: a presence-sensitive input component 464 for receiving input and a display component 462 for providing output.

One or more storage components 448 within computing system 410 may store information for processing during operation of computing system 410 (e.g., computing system 410 may store data accessed by FRM 422 during execution at computing system 410). In some examples, storage component 448 is a temporary memory, meaning that a primary purpose of storage component 448 is not long-term storage. Storage components 448 on computing system 410 may be configured for short-term storage of information as volatile memory and therefore not retain stored contents if powered off. Examples of volatile memories include random access memories (RAM), dynamic random-access memories (DRAM), static random-access memories (SRAM), and other forms of volatile memories known in the art.

Storage components 448, in some examples, also include one or more computer-readable storage media. Storage components 448 in some examples include one or more non-transitory computer-readable storage mediums. Storage components 448 may be configured to store larger amounts of information than typically stored by volatile memory. Storage components 448 may further be configured for long-term storage of information as non-volatile memory space and retain information after power on/off cycles. Examples of non-volatile memories include magnetic hard discs, optical discs, flash memories, or forms of electrically programmable memories (EPROM) or electrically erasable and programmable (EEPROM) memories. Storage components 448 may store program instructions and/or information (e.g., data) associated with FRM 422. Storage components 448 may include a memory configured to store data or other information associated with FRM 422 and enrolled information 428.

One or more processors 430 may implement functionality and/or execute instructions associated with computing system 410. Examples of processors 430 include application processors, display controllers, auxiliary processors, one or more sensor hubs, and any other hardware configure to function as a processor, a processing unit, or a processing device. FRM 422 may be operable by processors 430 to perform various actions, operations, or functions of computing system 410.

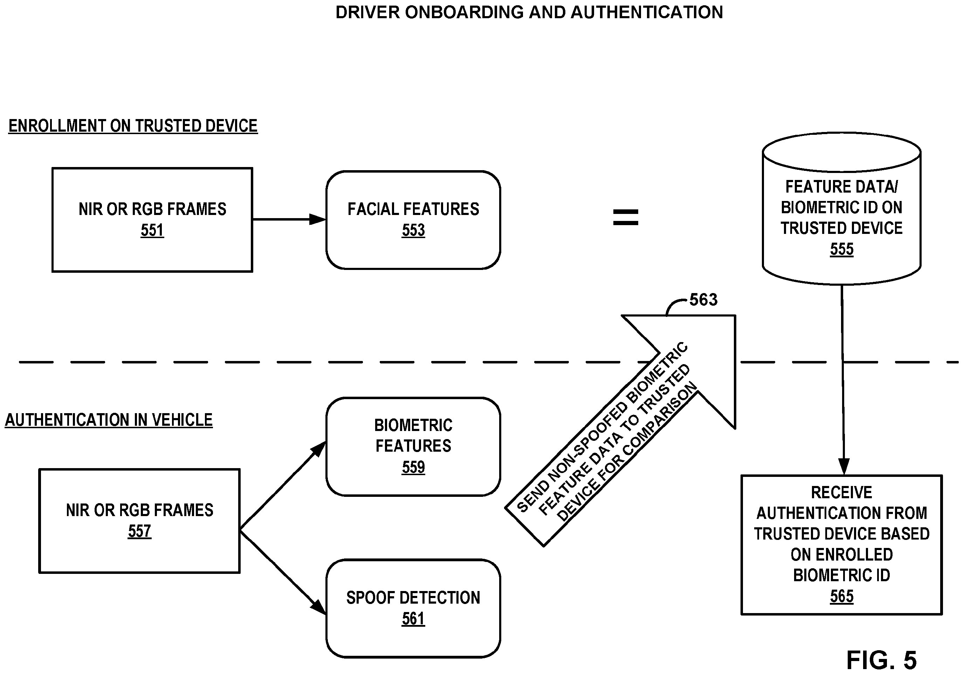

In certain examples, when computing system 410 comprises an example of vehicle computing system 100, storage devices 448 may include information and/or modules that are executable by processors 430 to implement corresponding functionality of vehicle computing system 100 (e.g., as illustrated and/or described in reference to system 100 in FIG. 1 and/or FIG. 5). In other examples, such as illustrated in FIG. 4, where computing system 410 comprises an example of computing device 310 of FIG. 3, processors 430 of computing system 410 may retrieve and execute instructions stored by storage components 448 that cause processors 430 to perform the operations described herein that are attributed to FRM 422. The instructions, when executed by processors 430, may cause computing system 410 to store information within storage components 448.

FRM 422 may include all functionality of FRM 322 of computing device 310 of FIG. 3 and may perform similar operations as FRM 322 for performing facial recognition to authenticate a user of computing system 410. FRM 422 may include an enrollment module 424 and an authentication module 426.

In some examples, enrollment module 424 may perform an enrollment process to associate image data of a known user of computing system 410 with a user account for the known user. In some examples, enrollment module 424 may perform the enrollment process one time for a given user account, for instance, when setting up a new account.

During the enrollment phase, image capture devices 414 captures one or more image data 330 (of FIG. 1) of a known user (e.g., a user logged in to a user account associated) of computing system 410 and generates image data indicative of each of the images. Enrollment module 424 of FRM 422 may receive the image data from image capture device 414 and analyze the image data to assign each of image data 330 to one or more pose buckets 332 (of FIG. 1).

Enrollment module 424 may determine which of pose buckets 332 is associated with image data based on characteristics or landmarks of the face of the known user included in the image data. For instance, enrollment module 424 may detect landmarks in the image data of the unknown user's face, such as the user's eyes, nose, and mouth, and may determine the yaw and pitch angle of the face based on the landmarks. For example, enrollment module 424 may receive image data 330A and determine the yaw angle of the user's face in image data 330A is approximately 0 degrees and the pitch angle of the user's face in image data 330A is approximately 0 degrees based on the landmarks in image data 330A. Enrollment module 424 may determine that pose bucket 332CC includes a range of yaw angles from -5 degrees to 5 degrees and a range of pitch angles from -5 degrees to 5 degrees (e.g., pose bucket 332CC is centered on 0 degrees yaw and 0 degrees pitch). In such examples, enrollment module 424 may determine that the yaw and pitch angles of the user's face in image data 330A are within the range of pitch and yaw angles for pose bucket 332CC, such that enrollment module 424 determines that image data 330A should be included within pose bucket 332CC. In some examples, enrollment module 424 may determine the amount of roll of the user's face in image data 330A. For example, enrollment module 424 may determine which of pose buckets 332 include image data 330A based on the yaw angle, pitch angle, and roll of the user's face in image data 330A.

In some examples, enrollment module 424 determines whether image data 330A should be included in a plurality of pose buckets 332. For example, enrollment module 424 may include image data 330A within a given pose bucket when the yaw and pitch angles of image data 330A are within a predefined distance (e.g., a radius of 10 degrees) of the center of the given pose bucket 332. For instance, enrollment module 424 may determine that the yaw and pitch angles of the user's face in image data 330A are 0 degrees and 0 degrees, respectively. In one instance, the predefined distance may be 10 degrees and pose bucket 332BC may be centered at 0 degrees yaw and 10 degrees pitch, such that enrollment module 424 may determine that the yaw and pitch angles of image data 330A lie within the predefined distance of the center of pose bucket 332BC. In such instances, enrollment module 424 may include image data 330A in pose bucket 332BC. Similarly, enrollment module 424 may determine that the yaw and pitch angles for image data 330A are within the predefined distance of the center of pose buckets 332CB, 332CD, and 332DC, and include image data 330A in pose buckets 332CB, 332CD, and 332DC in addition to pose buckets 332CC and 332BC.

In some examples, enrollment module 424 receives image data 330B after receiving image data 330A. Enrollment module 424 may determine whether to include image data 330B in any of pose buckets 332. Enrollment module 424 may determine the yaw angle of the user's face in image data 330B is approximately 0 degrees and the pitch angle of the user's face in image data 330B is approximately 19 degrees based on the landmarks in image data 330B. Enrollment module 424 may determine that pose bucket 332AC includes a range of yaw angles from -5 degrees to 5 degrees and a range of pitch angles from 15 degrees to 25 degrees (e.g., pose bucket 332AC is centered on 0 degrees yaw and 20 degrees pitch). In such examples, enrollment module 424 may determine that the yaw and pitch angles of the user's face in image data 330B are within the range of pitch and yaw angles for pose bucket 332AC. Enrollment module 424 may determine whether pose bucket 332AC includes one of image data 330 and may include image data 330B in pose bucket 332AC in response to determining that pose bucket 332AC does not already include image data.

Enrollment module 424 may determine whether to include image data 330B in any other pose buckets 332. For example, enrollment module 424 may determine whether the yaw and pitch angles for image data 330B are within the predefined distance of the center of other pose buckets 332. For instance, enrollment module 424 may determine that the predefined distance is 10 degrees and pose bucket 332BC is centered at 0 degrees yaw and 10 degrees pitch, such that enrollment module 424 may determine that the yaw and pitch angles of image data 330B (e.g., 0 degrees yaw, 19 degrees pitch) lie within the predefined distance of the center of pose bucket 332BC. Enrollment module 424 may determine whether to include image data 330B in pose bucket 332BC in response to determining that the yaw and pitch angles for image data 330B are within the predefined threshold of the center of pose bucket 332BC.

In some examples, enrollment module 424 determines that pose bucket 332BC already includes image data 330A and determines whether to replace image data 330A with image data 330B in pose bucket 332BC. In one example, enrollment module 424 may determine whether to replace image data 330A with image data 330B in pose bucket 332BC based on a distance between the center of pose bucket 332BC and the respective yaw and pitch angles for image data 330A, 330B. For example, enrollment module 424 may determine the yaw and pitch angles for image data 330A are 0 degrees, 0 degrees; the yaw and pitch angles for image data 330B are 0 degrees, 19 degrees, and the yaw and pitch angles for the center of pose bucket 332BC are 0 degrees, 10 degrees. In such examples, enrollment module 424 may determine that image data 330B is closer to the center of pose bucket 332BC than image data 330A, and may replace image data 330A with image data 330B within pose bucket 332BC.

In some examples, enrollment module 424 may determine whether to include image data 330A or image data 330B within pose bucket 332BC based on the order of receiving the image data 330A, 330B. For example, enrollment module 424 may include the oldest image data (e.g., the image data that was received first) within pose bucket 332BC. In such examples, enrollment module 424 may determine that image data 330A should be included within pose bucket 332BC as the image data 330A was received first. In another example, enrollment module 424 may include the most recent image data within pose bucket 332BC. In these examples, enrollment module 424 may determine that image data 330B should be included within pose bucket 332BC.

Enrollment module 424 may receive data indicative image data 330 from image capture devices 414 and determine whether a threshold number of pose buckets 332 include one of image data 330. For example, enrollment module 424 may determine a number of pose buckets 332 that include image data 330 of the face of the known user. Responsive to determining the number of pose buckets 332, enrollment module 424 determines whether the number of pose buckets that include image data 330 satisfies (e.g., is greater than or equal to) a threshold number of pose buckets. For example, enrollment module 424 may determine that the number of pose buckets 332 that include image data 330 satisfies the threshold number of pose buckets in response to determining that image data 330 are included within at least 75% of pose buckets 332. Responsive to determining that the number of pose buckets that include image data 330 does not satisfy the threshold number of pose buckets, enrollment module 424 may cause image capture devices 414 to capture one or more additional image data 330 for the enrollment process.

In some examples, enrollment module 424 may associate data indicative of the image data 330 with a user account for the known user in response to determining that the number of pose buckets that include image data 330 satisfies the threshold number of pose buckets. In some examples, image data 330 may include the images themselves or image templates for each respective image (e.g., computed facial feature data). The image templates may include a vector with a plurality of element values (e.g., 50 values, 100 values, 500 values, etc.). In some examples, each element value of the vector corresponds to a feature of the user's face (e.g., distance between the eyes, nose shape, etc.). Alternatively or additionally, element values of the vector may be generated through a non-linear machine learned model trained to generate outputs indicative of a facial identity. As one example, enrollment module 424 may apply a trained facial recognition model to the plurality of image data 330 and output an image template (e.g., a vector) for each respective image data 330. In some examples, enrollment module 424 associates the data indicative of image data 330 with the user account by assigning each image template an image template identifier and associating the respective image template identifier with a user account identifier for the user account for the known user.

Enrollment module 424 may store the data indicative of image data 330 (e.g., the images themselves or the image templates) to enrolled information 428. In some examples, enrollment module 424 encrypts the data indicative of image data 330 prior to storing the data indicative of image data 330. Image data 330 may be stored locally on computing system 410 such that the data is not transmitted over a network to any other devices. Further, computing system 410 may provide the user with an opportunity to delete the data indicative of image data 330.

In some scenarios, authentication module 426 performs the authentication process in response to receiving data indicative of an authentication image of a face of an unknown user 150 (of FIG. 1) using authentication module 426. The data indicative of the image of the face of the unknown user may include the image itself or an image template representing characteristics of the unknown user's face.

Responsive to receiving the data indicative of the authentication image data, authentication module 426 may determine whether unknown user 150 is a known user 338. Authentication module 426 may determine whether unknown user 150 is a known user 338 based on the authentication image data of user 150 and one or more enrollment image data 330. In some instances, authentication module 426 determines whether unknown user 150 is a known user 338 using a pose-independent (also referred to as pose invariant) technique or a pose-dependent technique.

In some pose-dependent examples, authentication module 426 determines whether the unknown user 150 is the known user 338 based on the authentication image data and a particular image data of image data 330 that includes the face of the known user in a pose closest to the pose of the face of unknown user 150 in the authentication image. In one example, the particular image data 330 that includes the face of the known user 338 in the pose closest to the pose of the face in the authentication image data may be the particular image of image data 330 that is included in the same pose bucket as a pose bucket 332 associated with the authentication image data.

Authentication module 426 may determine a pose bucket of pose buckets 332 associated with authentication image data of unknown user 150. For example, authentication module 426 may determine the pose bucket associated with this image data based on characteristics or landmarks of the face of the unknown user. For instance, authentication module 426 may determine the yaw angle and the pitch angle of the face in the authentication image data. Responsive to determining the yaw and pitch angles of the face in the authentication image data, authentication module 426 may determine which of pose buckets 332 include the yaw and pitch angle of the face in the authentication image data, and determine that pose bucket (e.g., pose bucket 332CD) is the pose bucket associated with the authentication image data. In some instances, authentication module 426 may determine a roll of the face of unknown user 150 in the authentication image data. Authentication module 426 may determine which of pose buckets 332 is associated with the authentication image data based on the yaw angle, the pitch angle, and the roll of the face in the authentication image data.

Authentication module 426 may determine which of image data 330 is included within the pose bucket associated with the authentication image data (e.g., pose bucket 332CD). In an example where pose bucket 332CD is associated with the authentication image data, authentication module 426 may query enrolled information 428 and determine that image data 330G is included within pose bucket 332CD. Responsive to determining that image data 330G is included within the pose bucket associated with the authentication image data, authentication module 426 may determine whether user 150 is the known user 338 by determining a similarity score for the selected image data 330G. In some examples, the similarity score for image data 330G indicates a similarity between image data 330G and the authentication image data.

Authentication module 426 may determine a similarity score for image data 330G based on the data indicative of image data 330G and the data indicative of the authentication image data. In some examples, the data indicative of image data 330G includes an image template for image data 330G. Such an image template may be represented as a vector and may be generated by a trained facial recognition model. The vector may include a plurality of element values that each correspond to a respective feature of the user's face (e.g., distance between the eyes, nose shape, etc.). Similarly, the authentication image data may include a vector generated in a similar manner. In some examples, authentication module 426 determines the similarity score by calculating an angle between a vector representing image data 330G and a vector representing the authentication image data. As another example, authentication module 426 may determine the similarity score for image data 330G by determining a cosine similarity between a vector representing image data 330G and a vector representing the authentication image data.

In some examples, authentication module 426 determines whether the similarity score for image data 330G satisfies a threshold similarity score. As one example, authentication module 426 determines the similarity score for image data 330G by determining the angle between the vector representing image data 330G and the vector representing the authentication image data, and determines that the similarity score for image data 330G satisfies the threshold similarity score in response to determining that the similarity score is less than the threshold similarity score. As another example, authentication module 426 determines the similarity score for image data 330G by determining the cosine similarity between the vector representing image data 330G and the vector representing the authentication image data, and determines that the similarity score for image data 330G satisfies the threshold similarity score in response to determining that the similarity score is greater than the threshold similarity score.

Authentication module 426 may determine unknown user 150 is the known user 338 in response to determining that the similarity score for image data 330G satisfies the threshold similarity score. Similarly, authentication module 426 may determine that unknown user 150 is not the known user 338 in response to determining that the similarity score for image data 330G does not satisfy the threshold similarity score.

In some pose-independent examples, authentication module 426 determines a respective similarity score for each of image data 330 to determine whether the unknown user 150 is the known user 338. The respective similarity score indicates a similarity between the corresponding image data of image data 330 and the authentication image data. As discussed above, authentication module 426 may determine a respective similarity score for each of image data 330 based on the data indicative of the respective image data 330 and the data indicative of the authentication image data. In some examples, the data indicative of image data 330 includes a respective image template. Such an image template may be represented as a vector and may be generated by a trained facial recognition model. The vector may include a plurality of element values that each correspond to a respective feature of the user's face. In such examples, the data indicative of the authentication image data may include a vector that includes a plurality of element values that each correspond to a respective feature of the face of unknown user 150. In some scenarios, authentication module 426 determines the respective similarity score for each of image data 330 by calculating an angle between the respective vector and the vector representing the authentication image data. As another example, authentication module 426 may determine the respective similarity score for each of image data 330 by determining a cosine similarity between the respective vector for each of image data 330 and the vector representing the authentication image data.

In one pose-independent example, authentication module 426 selects image data of image data 330 based on the respective similarity scores for image data 330 to determine whether unknown user 150 is the known user 338. Authentication module 426 selects the single image data of image data 330 with the similarity score indicative of a closest match to the authentication image data. In some examples, authentication module 426 determines the respective similarity scores for image data 330 based on an angle between each vector representing a respective image data of image data 330 and the vector representing the authentication image data and determines that the score indicative of the closest match is the lowest similarity score (e.g., the smaller angle between two vectors the closer the vectors are to one another). In another example, authentication module 426 determines the respective similarity scores for image data 330 based on a cosine similarity between each vector representing a respective image data of image data 330 and the vector representing the authentication image data and determines that the score indicative of the closest match is the highest similarity score (e.g., the larger cosine value between two vectors the more the vectors are more similar).

In some scenarios, authentication module 426 selects two or more image data of image data 330 based on the respective similarity scores to determine whether unknown user 150 is the known user 338. In one scenario, authentication module 426 determines a composite similarity score for two or more image data 330. In some instances, authentication module 426 may determine the composite similarity score based on the highest similarity scores for two or more image data 330 or the lowest similarity scores for two or more image data 330. In one instance, authentication module 426 may determine the composite similarity score based on the average of the respective similarity scores for two or more of image data 330 and may compare the composite similarity score to the threshold similarity score to determine whether unknown user 150 is the known user 338.

As another example, authentication module 426 may compare each respective similarity score for the two or more image data to the threshold similarity score. In such examples, authentication module 426 may determine that unknown user 150 is the known user 338 in response to determining that a threshold number (e.g., 100%, 80%, 60% etc.) of the selected image data have a similarity score that satisfies the threshold similarity score. For instance, authentication module 426 may determine that the set of selected image data include the three image data of image data 330 with the highest similarity scores, and may determine that unknown user 150 is the known user 338 in response to determining that the similarity score for two of the three selected image data satisfies the threshold similarity score.

In some cases, storage devices 448 may also store one or more models 429. For instance, in some cases, computing device 310 may utilize deep learning models to extract facial landmarks that help in identifying an individual, as described above. These models may be tailored to execute on the dedicated neural engines or processors of the personal devices. As described above, in some examples, an image template may generally correspond to a statistical model of one or more features (e.g., biometric features) of a user's face. For example, FRM 322 may generate an image template that includes a vector with a plurality of element values (e.g., 50 values, 100 values, 500 values, etc.). In some examples, each element value of the vector corresponds to a feature of the user's face (e.g., distance between the eyes, nose shape, etc.). Alternatively or additionally, element values of the vector may be generated through a, e.g., non-linear machine learned model trained to generate outputs indicative of a facial identity. For example, FRM 322 may apply a trained facial recognition model to the plurality of image data 330 and output an image template (e.g., embedding) for each respective image data 330 as a vector. Alternatively or additionally, element values of the vector may be generated through a non-linear machine learned model trained to generate outputs indicative of a facial identity. As one example, enrollment module 424 may apply a trained facial recognition model to the plurality of image data 330 and output an image template (e.g., a vector) for each respective image data 330. Such an image template may be represented as a vector and may be generated by a trained facial recognition model. The vector may include a plurality of element values that each correspond to a respective feature of the user's face (e.g., distance between the eyes, nose shape, etc.).

In some cases, the biometric feature information or identifier associated with a known user may include the various enrolled image data and/or features for that user that are stored in enrolled information 428, which may include image data and/or feature information for the various different poses for image data 330. This biometric information stored in enrolled information 428 may, in some cases, also include a unique identifier of the user, and/or information for a user profile or account that is specific to the user. The machine models may be stored locally (e.g., in models 429 of computing device 410), or may be stored remotely from device 410 (e.g., on one or more remote servers).

Responsive to determining that unknown user 150 is the known user 338, computing device 310 may send authentication data to IHU system 100 of the vehicle. For example, computing device 310 may send data indicative of a successful authentication of unknown user 150 as the known user 338, thereby indicating authentication of user 150. In some cases, computing device 310 may send user profile and/or account information that is customized or personalized for user 338 (e.g., authenticated user 150) to system 100. In some cases, computing device 310 may also send a unique identifier of user 338 and/or of computing device 310 to system 100 of the vehicle.

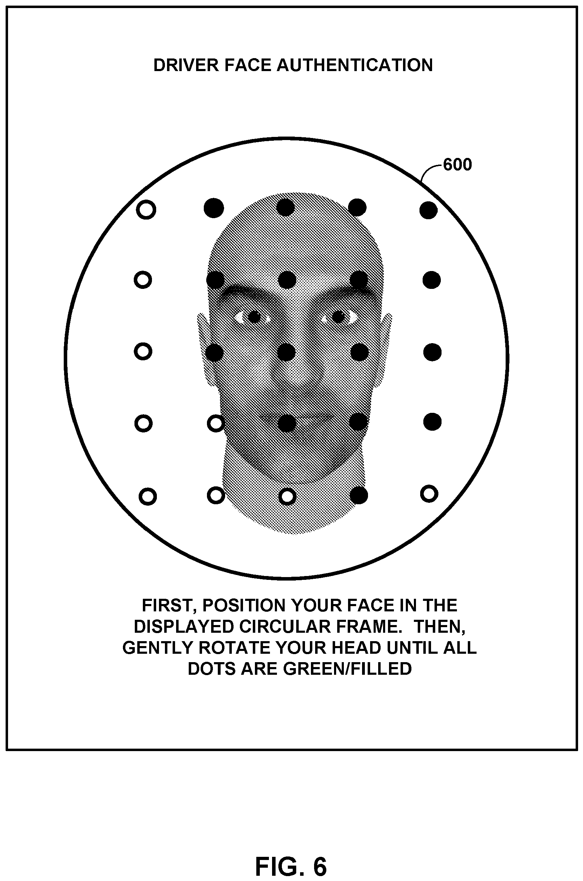

FIG. 5 is a diagram illustrating an example driver onboarding and authentication process, in accordance with one or more aspects of the present disclosure, and FIG. 6 is a diagram illustrating an example facial enrollment process, in accordance with one or more aspects of the present disclosure. Enrolling or onboarding a user 150, such as a driver, may be done on the user's personal device (e.g., mobile computing device 170 of FIG. 1, computing device 310 of FIG. 3), such as at the time of account creation on IHU system 100. This process involves running an enrollment application on the personal device that captures the biometric features of the user's face, using the front facing camera on the device, such as described above, e.g., in reference to FIG. 3. These corresponding facial features are stored as feature data on the personal device (e.g., enrolled information 328). The personal device is registered/paired as a trusted device with the IHU (e.g., IHU system 100 of FIG. 1). The camera of the personal device (e.g., one or more of image capture devices 314 of computing device 310) may be any of various different types of cameras, such as a camera capturing near infrared (NIR) frames and/or red-green-blue (RGB) frames. When the personal device is paired with the IHU, the personal device is recognized as a trusted device with respect to the IHU, and is assigned a unique identifier by the IHU. This trusted device, and its corresponding unique identifier, are associated by the IHU with the user (e.g., user 150) of the vehicle, and any profile and/or account information for that user.

In various examples, the enrollment process may include the following aspects. Various personal computing devices or systems, such as mobile computing device 170 and/or computing device 310, may be equipped with front-facing image capture devices 173 or 314, such as cameras. These cameras may use or provide NIR and/or RGB frames 551 for purposes of face identification, where these frames 551 may be one example of images 333 shown in FIG. 3. The NIR spectrum may, in some cases, provides better adaptability to different lighting conditions. In some examples, the personal device may utilize deep learning models to extract facial landmarks that help in identifying an individual, as described above. These models may be tailored to execute on the dedicated neural engines or processors of the personal devices. As described above, in some examples, an image template may generally correspond to a statistical model of one or more features (e.g., biometric features) 553 of a user's face, where features 553 may be one example of feature data 330. In some cases, computing device 310 may include model information within models 329 that is based on trained image and/or feature data for images taken with an NIR camera and/or an RGB camera. In some cases, computing device 310 may distill the information (e.g., feature data) in models 329 from one color space (RGB space) to another color space (NIR space). As a result, the cameras used within the vehicle of FIG. 1 do not necessarily have to be of the same type as the image capture devices (e.g., cameras) 314 used in computing device 310. For example, the vehicle may include NIR cameras, but image capture devices 314 may include RGB cameras. In various examples, the cameras used within the vehicle of FIG. 1 may be of the same type as image capture devices 314 included in computing device 310.

For example, FRM 322 may generate an image template that includes a vector with a plurality of element values (e.g., 50 values, 100 values, 500 values, etc.). In some examples, each element value of the vector corresponds to a feature of the user's face (e.g., distance between the eyes, nose shape, etc.). Alternatively or additionally, element values of the vector may be generated through a, e.g., non-linear machine learned model trained to generate outputs indicative of a facial identity. For example, FRM 322 may apply a trained facial recognition model to frames 551 and output an image template (e.g., embedding) for respective facial features in features 553 as a vector. Alternatively or additionally, element values of the vector may be generated through a non-linear machine learned model trained to generate outputs indicative of a facial identity.

As one example, enrollment module 424 may apply a trained facial recognition model to frames 551 and output an image template (e.g., a vector) for respective facial features in features 553. Such an image template may be represented as a vector and may be generated by a trained facial recognition model. The vector may include a plurality of element values that each correspond to a respective feature of the user's face (e.g., distance between the eyes, nose shape, etc.). In some cases, the biometric feature information or identifier 555 associated with a known user may include the various enrolled features for that user that are stored on the trusted device (e.g., in enrolled information 328), and the stored information may include feature information for the various different poses. This biometric information stored in enrolled information 328 may also include a unique identifier of the user, and/or information for a user profile or account that is specific to the user. The machine models may be stored locally (e.g., on mobile computing device 170, computing device 310, computing device 410, IHU system), or may be stored remotely from these systems (e.g., on one or more remote servers).

In one or more alternate examples to the one illustrated in FIG. 5, the trusted mobile computing device may send the enrolled feature data to a vehicle computing system (e.g., vehicle computing system 100), which then may be configured to perform authentication of the unknown user in the vehicle by comparing the authentication feature data of the unknown user to the received enrolled feature data of a known user. In these cases, vehicle computing system 100 receives, from the mobile computing device, the feature data (e.g., feature data or identifier 555) associated with the at least one image of the face of the previously enrolled user. Vehicle computing system 100 may then be configured to this received feature data with the feature data (e.g., features 559) associated with the captured image of the face of the user inside the vehicle. Vehicle computing system 100 may then determine, based on the comparing, the match between the user of the vehicle and the previously enrolled user, where the authentication data processed by vehicle computing system 100 comprises an indication of the match.

As described previously in reference to FIG. 3, and as also shown in FIG. 5, during the enrollment process, the computing device (e.g., mobile computing device 170, computing device 310) may create a gallery of facial image data (e.g., feature data) against different face poses of the same user (e.g., known user 338). The face pose estimation is comprised of pan and tilt values of the face. The poses for which facial features are registered can appear as a pattern on the personal device. These patterns guide the user to move their head capturing different poses of the face, such as shown in FIG. 6.

FIG. 6 illustrates a screen display of how this can be accomplished inside an application on the personal device. A known user 338 may utilize one or more of image capture devices 314 to view one or more images of user 338 that are output at PSD 312. A representation of these images may be displayed at PSD 312 within a graphical frame 600 that is visible by user 338. Computing device 310 may output instructions to user 338 via PSD 312, such as shown in FIG. 6.

For example, computing device 310 may output instructions to user 338 to move his/her face relative to image capture device 314 in order to position the user's 338 face within frame 600, and then to gently rotate user's 338 head until all dots shown in frame 600 turn a certain color (e.g., green), or switch from unfilled dots to fully filled dots. As shown in FIG. 6, nine dots included in frame 600 are currently unfilled, indicating that user 338 should rotate his/her head until all of the dots turn green or switch from an unfilled to a filled state or color (e.g., black). Once user 338 has done so, image capture device 314 will capture and store images for that given pose in enrolled information (e.g., data store) 328. Computing device 310 may instruct user 338 to strike various different poses when capturing feature data 330 for various different poses, based on different pitch and yaw angles, such as previously described in reference to FIG. 3. Computing device 310 may iterate the above process in reference to FIG. 6 for each of these different poses of user 338. The facial feature data of corresponding features/landmarks, for the various different facial poses, may then be stored in an enrolled galley in enrolled information 328. In some cases, enrolled information 328 may comprise a secure enclave of the personal device 310.

Computing device 310, which is one example of mobile computing device 170, may be registered with IHU system 100 of the vehicle shown in FIG. 1, and, upon registration, may be a trusted companion device for the vehicle. IHU system 100 may assign a unique identifier to computing device 310 and/or known user 338, which may be associated with the user's account on IHU system 100. For example, user 150 of the vehicle may have a user's account on IHU system 100, which includes a personal profile for user 150, associated with information that may be shown on display 112 of IHU system 100 that is customized or personalized for user 150, as described previously in reference to FIGS. 1-2. The unique identifier assigned by IHU system 100 to computing device 310 and/or known user 338 may be associated with the user account or profile of user 150, when user 150 is authenticated as known user 338 of device 310.

In some cases, user 150 may also have a wearable device 107 (e.g., smartwatch). In these cases, mobile computing device 170 may, in some examples, communicate with wearable device 107 to provide the information included in enrolled information 328 for storage on wearable device 107. In these examples, wearable device 107 may be configured to store the information included in enrolled information 328. As a result, once wearable device 107 stores this information, wearable device 107 may perform the authentication functionality previously described in reference to FIG. 3. For instance, wearable device 107 may be one example of computing device 310 shown in FIG. 3. In these cases, user 150 of the vehicle may not necessarily have a separate mobile computing device 170 in the vehicle or in proximity to IHU system 100. Instead, IHU system 100 may communicate directly with wearable device 107 for authenticating user 150. As noted previously, IHU system 100 may communicate with wearable device 107 and/or mobile computing device 170 using a wireless communication protocol (e.g., BLUETOOTH, WIFI, BLE).

Referring again to FIG. 5, at the time of authenticating user 150 of the vehicle shown in FIG. 1, the image frames 557 from the in-car driver facing camera 104/111 (e.g., NIR or RGB camera) are used to compute biometric features 559 of the face of user 150, who may be seated in the driver seat. These features 559 are then sent (563) from IHU system 100 to computing device 310 (e.g., mobile computing device 170, wearable device 107), which may occur over a secure channel for, e.g., non-spoofed features, such as described further below. Computing device 310 may be a trusted, previously registered device with respect to system 100

As described previously, the software on computing device 310 determines if there is a match in the facial features of the current driver 150 and the enrolled, known user 338. If there is a match, computing device 310 sends IHU system 100 data indicative of the match, and IHU system 100 receives (565) this data indicative of a match as representing authentication of the registered user, and proceeds to log in the registered user (e.g., user 150 of the vehicle).

Regarding facial feature estimation, models similar to the enrollment models may be used by IHU system 100. As described previously, computing device 310 may utilize one or more models 329 (e.g., enrollment models) to identify feature vector data for images of known user 338 taken by image capture devices 314. IHU system 100 may utilize similar models for identifying feature vector data for images of user 150 taken by camera 104 and/or 111 in the vehicle. IHU system 100 may, for example, utilize these models to determine the facial features of user 150 based on, e.g., NIR images acquired by camera 104, 111. These features may, in some cases, be encrypted and sent by IHU system 100 to the trusted device (e.g., computing device 310, mobile computing device 170) for authentication user 150. IHU system and the trusted device may communicate using various different encryption/decryption techniques to maintain the confidentiality of the feature data that is exchanged between these entities. In some examples, IHU system 100 may establish a secure communication channel with the previously registered trusted device. This channel can be established over, e.g., BLUETOOTH/BLE, or other wireless interfaces.

Regarding authentication on trusted device (e.g., computing device 310), the trusted device may, upon receiving the incoming feature data (e.g., feature vector data) from IHU system 100, may compare such data against the gallery of saved feature vectors, and a match is determined, such as described previously (e.g., in reference to FIG. 3). If there is a match, an indication of this match, and/or authentication data for the user (e.g., registered token) is sent to the IHU system 100 over the secure channel, which may be used or otherwise serve as the trigger to log in user 150 into the IHU system 100.

In some instances, it is possible that an intruder with a stolen personal device (e.g., computing device 310) can attempt to unlock the IHU system 100 using, e.g., a three-dimensional mask of the owner (e.g., user 150), or other images (e.g., paper images) of the owner's face. The deep learning models used by IHU system and/or computing device 310 may be capable of spotting or otherwise detecting such a spoofing attempt, as part of spoof detection 561, and abort the authentication procedure. For example, these models may be trained with various different objects and types of objects (e.g., human objects, paper objects, plastic objects). As a result, the models may include various different feature data (e.g., feature vectors) that include features associated with images of these different types of objects, and the models may be used to identify features of, e.g., a three-dimensional mask or paper image of an owner, in an effort to abort any authentication procedures associated with such spoofing attempts.

In addition, in various examples, IHU system 100 may utilize deep learning models and/or inputs from other signals to determine the presence of user 150, and/or an appropriate or optimal time to capture a facial image of user 150 using cameras 104/111. For example, IHU system 100 may utilize a learning model, trained with various image information to store corresponding feature vector information, to determine the gaze of user 150. IHU system 100 may determine to capture a facial image of user 150 when the gaze of user 150 is towards the camera, or when the pose of user 150 is optimal for capturing an increased number of facial feature information for use in authenticating user 150. In addition, system 100 may utilize additional signals provided by the vehicle. For example, if the vehicle provides signals to system 100 indicative of user's 150 seatbelt being fastened, user's 150 hands on steering wheel 154, or the change of the vehicle's gear from park to drive, system 100 may use these signals (independently or in conjunction with gaze information gathered from the camera) to determine an appropriate or optimal time to capture a facial image of user 150 using cameras 104/111.

As noted above, in many cases, the cameras used by IHU system 100 (e.g., cameras 104/111) and/or cameras used by computing device 310 (e.g., image capture devices 314) may comprise NIR cameras, which may provide improved adaptability to ambient lighting and worn items like sunglasses. However, these systems and devices may use any number of other different types of cameras (e.g., RGB cameras, NIR cameras, etc.).

The techniques of the present disclosure address the challenge of reliable authentication of a user (e.g., user 150) using biometric features computed from frames captured by different cameras (e.g., cameras of IHU system 100 and cameras of computing device 310), where such comparison and authentication may be invariant or adaptable to various different lighting conditions. As described previously, the cameras of IHU system 100 and computing device 310 may be of the same type or different types, which provides added flexibility. The models used in system 100 and/or computing device 310 may be trained using an approach that can generate matchable features for the same individual's face captured using different cameras. The disclosed techniques also reliably handle faces at differing distances/poses from the in-car camera of IHU system 100, due to the robust processes and enrollment feature data stored for different user poses in computing device 310.

These aspects may be potentially achieved without user intervention by user 150, offering a seamless "get in and drive" experience for user 150. The models used by IHU system 100 and/or computing device 310 to compute biometric features allow the above workflow to work with different personal devices (e.g., personal devices running various different operating systems). Additionally, since the facial features of any user stays on the user's personal device (e.g., trusted device 310), there user's private biometric identity and information resides only on the user's personal device, and not on IHU system, which may be included in a shared vehicle potentially used by various different individuals.

In some examples, the disclosed techniques also enable use cases where a user can log in to a rental/shared/leased car and have the same personalized experience without worrying about having to wipe out any personal information after the user is done using the vehicle. In these examples, no personal information is stored in the IHU system 100 of such a vehicle, but is instead only stored on the user's personal device (e.g., device 310).

In some other examples, another use of the disclosed techniques could be for ride-sharing applications to verify the identity of a registered driver (e.g., user 150), and prevent unregistered individuals, who may have stolen or are otherwise carrying the personal device of the registered driver, from being able to accept any ride requests using IHU system 100. In certain other examples, the disclosed techniques may confirm the identity or otherwise authenticate user 150 of the vehicle before allowing user 150 to operate the vehicle, in order to prevent unauthorized individuals from operating the vehicle.

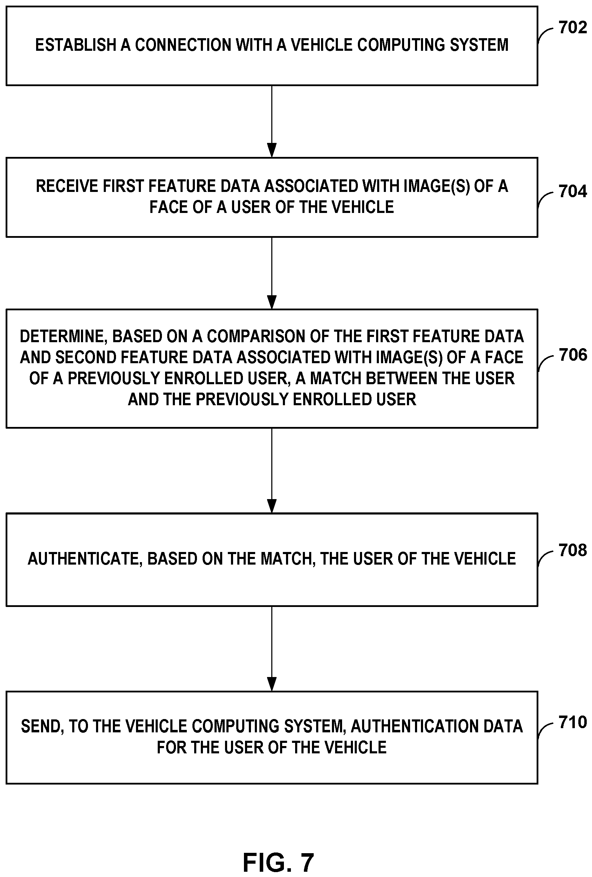

FIG. 7 is a flowchart illustrating example process performed by an example computing system, in accordance with one or more aspects of the present disclosure. For example, the process illustrated in FIG. 7 may be performed by mobile computing device 170 (FIG. 1), wearable device 107 (FIG. 1), computing device 310 (FIG. 3), and/or computing system 410 (FIG. 4). For purposes of illustration only, the process of FIG. 7 will be described in reference to operations performed by computing device 310.

Computing device 310 may establish (702) a connection with a vehicle computing system (e.g., IHU system 100) of a vehicle. For example, computing device 310 may utilize one or more communication units (e.g., communication units 446) to establish this connection. After establishing the connection, computing device 310 may receive (704), from the vehicle computing system, first feature data associated with at least one image of a face of a user (e.g., user 150) of the vehicle. The at least one image of the face of the user of the vehicle may captured by an image capture device (e.g., camera 104, 111) connected to at least a portion of the vehicle.

Computing device 310 may then determine (706), based on a comparison between the first feature data and second feature data (e.g., feature data associated with images 330 stored in enrolled information 328) associated with at least one image of a face of a previously enrolled user (e.g., user 338), a match between the user of the vehicle and the previously enrolled user. Computing device 310 may authenticate (708), based on the match, the user of the vehicle, and send (710), to the vehicle computing system, authentication data for the user of the vehicle, where the authentication data is indicative of the match.

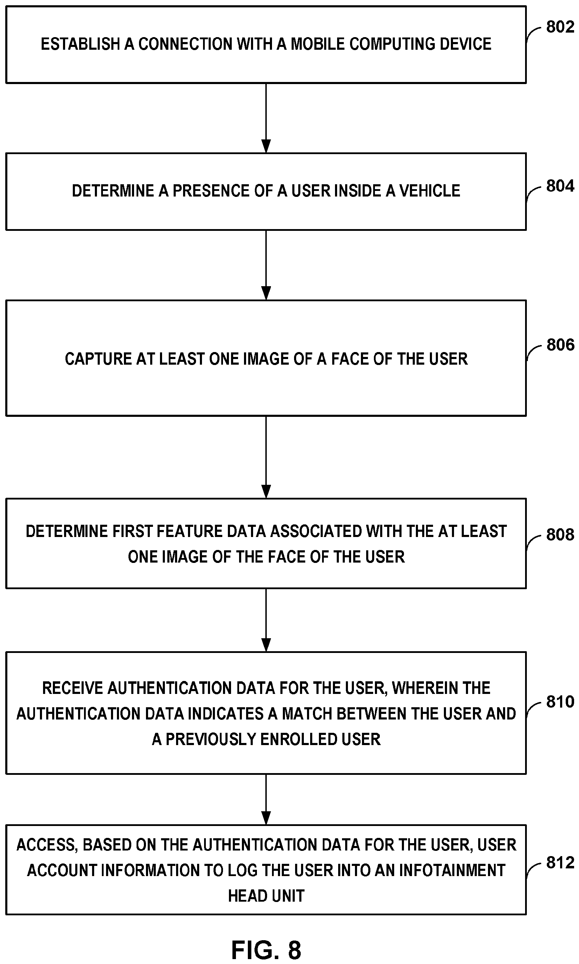

FIG. 8 is a flowchart illustrating example process performed by an example vehicle computing system, in accordance with one or more aspects of the present disclosure. For example, the process illustrated in FIG. 8 may be performed by vehicle computing system 100 of FIG. 1 and/or computing system 410 (FIG. 4). For purposes of illustration only, the process of FIG. 8 will be described in reference to operations performed by vehicle computing system 100.

Vehicle computing system 100 may establish (802) a connection with a mobile computing device (e.g., mobile computing device 170 of FIG. 1, wearable device 107 of FIG. 1, computing device 310 of FIG. 3), where the vehicle computing system includes an infotainment head unit. Vehicle computing system 100 may determine (804) a presence of a user (e.g., user 150) inside a vehicle. After determining the presence of the user inside the vehicle, vehicle computing system 100 captures (806), using an image capture device (e.g., camera 104 and/or 111) that is connected to at least a portion of the vehicle, at least one image of a face of the user.

Vehicle computing system 100 determines (808) first feature data associated with the at least one image of the face of the user, and receives (810) authentication data for the user. The authentication data indicates a match between the user and a previously enrolled user. Vehicle computing system 100 then accesses (812), based on the authentication data for the user, user account information to log the user into the infotainment head unit.

The following Examples are provided for purposes of illustration only.

Example 1: A method comprising: establishing, by a mobile computing device, a connection with a vehicle computing system of a vehicle; after establishing the connection, receiving, by the mobile computing device and from the vehicle computing system, first feature data associated with at least one image of a face of a user of the vehicle, wherein the at least one image of the face of the user of the vehicle is captured by an image capture device connected to at least a portion of the vehicle; determining, by the mobile computing device and based on a comparison between the first feature data and second feature data associated with at least one image of a face of a previously enrolled user of the mobile computing device, a match between the user of the vehicle and the previously enrolled user; authenticating, by the mobile computing device and based on the match, the user of the vehicle; and sending, by mobile computing device and to the vehicle computing system, authentication data for the user of the vehicle, wherein the authentication data is indicative of the match.

Example 2: The method of Example 1, wherein the vehicle computing system includes an infotainment head unit, and wherein sending, by the mobile computing device and to the vehicle computing system, the authentication data for the user of the vehicle causes the vehicle computing system to access user account information to log the user of the vehicle into the infotainment head unit.

Example 3: The method of any of Examples 1-2, wherein the authentication data for the user of the vehicle includes unique identification information associated with at least one of the mobile computing device or the user of the vehicle.

Example 4: The method of any of Examples 1-3, wherein establishing the connection comprises securely pairing the mobile computing device with the vehicle computing system of the vehicle, wherein the mobile computing device comprises a trusted device that is associated with a user account of the user of the vehicle on the vehicle computing system.

Example 5: The method of any of Examples 1-4, wherein receiving the feature data associated with the at least one image of the face of the user of the vehicle comprises, by the mobile computing device and from the vehicle computing system, an encrypted copy of the feature data associated with the at least one image of the face of the user of the vehicle.

Example 6: The method of any of Examples 1-5, wherein: the second feature data associated with the at least one image of the face of the previously enrolled user is associated with at least one feature vector and is included in at least one pose bucket from a plurality of pose buckets; and each pose bucket from the plurality of pose buckets is associated with a respective range of pitch angles of the face of the previously enrolled user and a respective range of yaw angles of the face of the previously enrolled user.

Example 7: The method of Example 6, further comprising: selecting, by the mobile computing device, from the second feature data, feature data included in a particular pose bucket of the plurality of pose buckets, wherein the particular pose bucket is associated with the first feature data associated with the at least one image of the face of the user of the vehicle, and wherein determining the match between the user of the vehicle and the previously enrolled user is based on the first feature data and the selected feature data associated with the at least one image of the face of the previously enrolled user.

Example 8: The method of Example 7, further comprising: determining, by the mobile computing device, a similarity score indicating a similarity between the first feature data associated with the at least one image of the face of the user of the vehicle and the selected feature data associated with the at least one image of the face of the previously enrolled user, wherein determining the match between the user of the vehicle and the previously enrolled user occurs responsive to determining that the similarity score satisfies a threshold similarity score.

Example 9: The method of any of Examples 1-8, wherein the second feature data associated with the at least one image of the face of the previously enrolled user comprises a plurality feature data associated with the at least one image of the face of the previously enrolled user, the method further comprising: determining, by the mobile computing device, based on the first feature data associated with the at least one image of the face of the user of the vehicle and each feature data of the plurality of feature data associated with the at least one image of the face of the previously enrolled user, a respective similarity score for each feature data of the plurality of feature data associated with the at least one image of the face of the previously enrolled user, wherein each similarity score indicates a similarity between the first data associated with the at least one image of the face of the user of the vehicle and the respective feature data of the plurality of feature data associated with the at least one image of the face of the previously enrolled user, wherein determining the match between the user of the vehicle and the previously enrolled user is based on the respective similarity score for the plurality of feature data associated with the at least one image of the face of the previously enrolled user.

Example 10: The method of Example 9, further comprising: determining, by the mobile computing device, based on the respective similarity scores, a highest ranked feature data of the plurality of feature data associated with the at least one image of the face of the previously enrolled user, wherein determining the match between the user of the vehicle and the previously enrolled user is based on the highest ranked feature data of the plurality of feature data associated with the at least one image of the face of the previously enrolled user.

Example 11: The method of Example 9, further comprising: determining, by the mobile computing device, based on the similarity scores for two or more feature data of the plurality of feature data associated with the at least one image of the face of the previously enrolled user, a composite similarity score, wherein determining the match between the user of the vehicle and the previously enrolled user is responsive to determining that the composite similarity score satisfies a threshold similarity score.

Example 12: The method of Example 9, wherein determining the match between the user of the vehicle and the previously enrolled user is responsive to determining that the respective similarity score for each of two or more feature data associated with the at least one image of the face of the previously enrolled user satisfies a threshold similarity score.

Example 13: The method of any of Examples 1-12, further comprising: determining, by the mobile computing device and during an enrollment phase, the second feature data of the at least one image of the face of the previously enrolled user using a machine learning model.

Example 14: The method of any of Examples 1-13, wherein the mobile computing device comprises a wearable computing device.

Example 15: A method comprising: establishing, by a vehicle computing system of a vehicle, a connection with a mobile computing device, wherein the vehicle computing system includes an infotainment head unit; determining, by the vehicle computing system, a presence of a user inside the vehicle; after determining the presence of the user inside the vehicle, capturing, by the vehicle computing system using an image capture device that is connected to at least a portion of the vehicle, at least one image of a face of the user; determining, by the vehicle computing system, first feature data associated with the at least one image of the face of the user; receiving, by the vehicle computing system, authentication data for the user, wherein the authentication data indicates a match between the user and a previously enrolled user based on a comparison between the first feature data and second feature data associated with at least one image of a face of the previously enrolled user; and accessing, by the vehicle computing system and based on the authentication data for the user, user account information to log the user into the infotainment head unit.

Example 16: The method of Example 15, further comprising: sending, by the vehicle computing system and to the mobile computing device, the first feature data associated with the at least one image of the face of the user, wherein receiving the authentication data for the user comprises, after sending the first feature data, receiving, by the vehicle computing system and from the mobile computing device, the authentication data for the user.

Example 17: The method of Example 15, further comprising: receiving, by the vehicle computing system and from the mobile computing device, the second feature data associated with the at least one image of the face of the previously enrolled user; comparing, by the vehicle computing system, the first feature data and the second feature data; and determining, by vehicle computing system based on the comparing, the match between the user and the previously enrolled user, wherein the authentication data comprises an indication of the match.

Example 18: A system comprising: at least one processor; and at least one computer-readable storage device storing instructions that, when executed by the at least one processor, cause the at least one processor to perform the method of any of Examples 1-17.

Example 19: A computer-readable storage medium storing instructions that, when executed by at least one processor, cause the at least one processor to perform the method of any of Examples 1-17.

In one or more examples, the functions described may be implemented in hardware, hardware and software, hardware and firmware, or any combination thereof. If implemented in software, the functions may be stored on or transmitted over, as one or more instructions or code, a computer-readable medium and executed by a hardware-based processing unit. Computer-readable medium may include computer-readable storage media or mediums, which corresponds to a tangible medium such as data storage media, or communication media including any medium that facilitates transfer of a computer program from one place to another, e.g., according to a communication protocol. In this manner, computer-readable medium generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable medium.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various embodiments have been described. These and other embodiments are within the scope of the following claims.

## Claims

1. A method comprising:
establishing, by a mobile computing device, a connection with a vehicle computing system of a vehicle;
after establishing the connection, receiving, by the mobile computing device and from the vehicle computing system, first feature data associated with at least one image of a face of a user of the vehicle, wherein the at least one image of the face of the user of the vehicle is captured by an image capture device connected to at least a portion of the vehicle;
determining, by the mobile computing device and based on a comparison between the first feature data and second feature data associated with at least one image of a face of a previously enrolled user of the mobile computing device, a match between the user of the vehicle and the previously enrolled user;
authenticating, by the mobile computing device and based on the match, the user of the vehicle; and
sending, by mobile computing device and to the vehicle computing system, authentication data for the user of the vehicle, wherein the authentication data is indicative of the match.

2. The method of claim 1,
wherein the vehicle computing system includes an infotainment head unit, and
wherein sending, by the mobile computing device and to the vehicle computing system, the authentication data for the user of the vehicle causes the vehicle computing system to access user account information to log the user of the vehicle into the infotainment head unit.

3. The method of any of claims 1-2, wherein the authentication data for the user of the vehicle includes unique identification information associated with at least one of the mobile computing device or the user of the vehicle.

4. The method of any of claims 1-3, wherein establishing the connection comprises securely pairing the mobile computing device with the vehicle computing system of the vehicle, wherein the mobile computing device comprises a trusted device that is associated with a user account of the user of the vehicle on the vehicle computing system.

5. The method of any of claims 1-4, wherein receiving the feature data associated with the at least one image of the face of the user of the vehicle comprises, by the mobile computing device and from the vehicle computing system, an encrypted copy of the feature data associated with the at least one image of the face of the user of the vehicle.

6. The method of any of claims 1-5, wherein:
the second feature data associated with the at least one image of the face of the previously enrolled user is associated with at least one feature vector and is included in at least one pose bucket from a plurality of pose buckets; and
each pose bucket from the plurality of pose buckets is associated with a respective range of pitch angles of the face of the previously enrolled user and a respective range of yaw angles of the face of the previously enrolled user.

7. The method of claim 6, further comprising:
selecting, by the mobile computing device, from the second feature data, feature data included in a particular pose bucket of the plurality of pose buckets,
wherein the particular pose bucket is associated with the first feature data associated with the at least one image of the face of the user of the vehicle, and
wherein determining the match between the user of the vehicle and the previously enrolled user is based on the first feature data and the selected feature data associated with the at least one image of the face of the previously enrolled user.

8. The method of claim 7, further comprising:
determining, by the mobile computing device, a similarity score indicating a similarity between the first feature data associated with the at least one image of the face of the user of the vehicle and the selected feature data associated with the at least one image of the face of the previously enrolled user,
wherein determining the match between the user of the vehicle and the previously enrolled user occurs responsive to determining that the similarity score satisfies a threshold similarity score.

9. The method of any of claims 1-8, wherein the second feature data associated with the at least one image of the face of the previously enrolled user comprises a plurality feature data associated with the at least one image of the face of the previously enrolled user, the method further comprising:
determining, by the mobile computing device, based on the first feature data associated with the at least one image of the face of the user of the vehicle and each feature data of the plurality of feature data associated with the at least one image of the face of the previously enrolled user, a respective similarity score for each feature data of the plurality of feature data associated with the at least one image of the face of the previously enrolled user, wherein each similarity score indicates a similarity between the first feature data associated with the at least one image of the face of the user of the vehicle and the respective feature data of the plurality of feature data associated with the at least one image of the face of the previously enrolled user,
wherein determining the match between the user of the vehicle and the previously enrolled user is based on the respective similarity score for the plurality of feature data associated with the at least one image of the face of the previously enrolled user.

10. The method of claim 9, further comprising:
determining, by the mobile computing device, based on the respective similarity scores, a highest ranked feature data of the plurality of feature data associated with the at least one image of the face of the previously enrolled user,
wherein determining the match between the user of the vehicle and the previously enrolled user is based on the highest ranked feature data of the plurality of feature data associated with the at least one image of the face of the previously enrolled user.

11. The method of claim 9, further comprising:
determining, by the mobile computing device, based on the similarity scores for two or more feature data of the plurality of feature data associated with the at least one image of the face of the previously enrolled user, a composite similarity score,
wherein determining the match between the user of the vehicle and the previously enrolled user is responsive to determining that the composite similarity score satisfies a threshold similarity score.

12. The method of claim 11, wherein determining the match between the user of the vehicle and the previously enrolled user is responsive to determining that the respective similarity score for each of two or more feature data associated with the at least one image of the face of the previously enrolled user satisfies a threshold similarity score.

13. A method comprising:
establishing, by a vehicle computing system of a vehicle, a connection with a mobile computing device, wherein the vehicle computing system includes an infotainment head unit;
determining, by the vehicle computing system, a presence of a user inside the vehicle;
after determining the presence of the user inside the vehicle, capturing, by the vehicle computing system using an image capture device that is connected to at least a portion of the vehicle, at least one image of a face of the user;
determining, by the vehicle computing system, first feature data associated with the at least one image of the face of the user;
sending, by the vehicle computing system and to the mobile computing device, the first feature data associated with the at least one image of the face of the user,
receiving, by the vehicle computing system and from the mobile computing device, authentication data for the user, wherein the authentication data indicates a match between the user and a previously enrolled user based on a comparison between the first feature data and second feature data associated with at least one image of a face of the previously enrolled user; and
accessing, by the vehicle computing system and based on the authentication data for the user, user account information to log the user into the infotainment head unit.

14. A mobile computing device comprising:
at least one processor; and
at least one computer-readable storage device storing instructions that, when executed by the at least one processor, cause the at least one processor to perform the method of any of claims 1-12.

15. A vehicle computing system comprising: at least one processor; and
at least one computer-readable storage device storing instructions that, when executed by the at least one processor, cause the at least one processor to perform the method of claim 13.

## Patentansprüche

1. Verfahren, umfassend:
Herstellen, durch ein mobiles Computergerät, einer Verbindung mit einem Fahrzeugcomputersystem eines Fahrzeugs;
nach dem Herstellen der Verbindung, Empfangen, durch das mobile Computergerät und von dem Fahrzeugcomputersystem, erster Merkmalsdaten, die mit zumindest einem Bild eines Gesichts eines Benutzers des Fahrzeugs assoziiert sind, wobei das zumindest eine Bild des Gesichts des Benutzers des Fahrzeugs durch eine Bilderfassungsvorrichtung erfasst wird, die mit zumindest einem Teil des Fahrzeugs verbunden ist;
Ermitteln, durch das mobile Computergerät und basierend auf einem Vergleich zwischen den ersten Merkmalsdaten und zweiten Merkmalsdaten, die mit zumindest einem Bild eines Gesichts eines zuvor registrierten Benutzers des mobilen Computergeräts assoziiert sind, einer Übereinstimmung zwischen dem Benutzer des Fahrzeugs und dem zuvor registrierten Benutzer;
Authentifizieren, durch das mobile Computergerät und basierend auf der Übereinstimmung, des Benutzers des Fahrzeugs; und
Senden, durch das mobile Computergerät und an das Fahrzeugcomputersystem, von Authentifizierungsdaten für den Benutzer des Fahrzeugs, wobei die Authentifizierungsdaten die Übereinstimmung anzeigen.

2. Verfahren nach Anspruch 1,
wobei das Fahrzeugcomputersystem eine Infotainment-Kopfeinheit beinhaltet, und
wobei das Senden, durch das mobile Computergerät und an das Fahrzeugcomputersystem, der Authentifizierungsdaten für den Benutzer des Fahrzeugs das Fahrzeugcomputersystem veranlasst, auf Benutzerkontoinformationen zuzugreifen, um den Benutzer des Fahrzeugs in der Infotainment-Kopfeinheit anzumelden.

3. Verfahren nach einem der Ansprüche 1-2, wobei die Authentifizierungsdaten für den Benutzer des Fahrzeugs eindeutige Identifikationsinformationen beinhalten, die mit zumindest einem von dem mobilen Computergerät oder dem Benutzer des Fahrzeugs assoziiert sind.

4. Verfahren nach einem der Ansprüche 1-3, wobei das Herstellen der Verbindung ein sicheres Paaren des mobilen Computergeräts mit dem Fahrzeugcomputersystem des Fahrzeugs umfasst, wobei das mobile Computergerät ein vertrauenswürdiges Gerät umfasst, das mit einem Benutzerkonto des Benutzers des Fahrzeugs auf dem Fahrzeugcomputersystem assoziiert ist.

5. Verfahren nach einem der Ansprüche 1-4, wobei das Empfangen der Merkmalsdaten, die mit dem zumindest einen Bild des Gesichts des Benutzers des Fahrzeugs assoziiert sind, eine verschlüsselte Kopie der Merkmalsdaten, die mit dem zumindest einen Bild des Gesichts des Benutzers des Fahrzeugs assoziiert sind, durch das mobile Computergerät und von dem Fahrzeugcomputersystem umfasst.

6. Verfahren nach einem der Ansprüche 1-5, wobei:
die zweiten Merkmalsdaten, die mit dem zumindest einen Bild des Gesichts des zuvor registrierten Benutzers assoziiert sind, mit zumindest einem Merkmalsvektor assoziiert sind und in zumindest einem Posen-Bucket von einer Vielzahl von Posen-Buckets beinhaltet sind; und
jeder Posen-Bucket von der Vielzahl von Posen-Buckets mit einem jeweiligen Bereich von Steigungswinkeln des Gesichts des zuvor registrierten Benutzers und einem entsprechenden Bereich von Gierwinkeln des Gesichts des zuvor registrierten Benutzers assoziiert ist.

7. Verfahren nach Anspruch 6, ferner umfassend:
Auswählen, durch das mobile Computergerät, aus den zweiten Merkmalsdaten, von Merkmalsdaten, die in einem bestimmten Posen-Bucket der Vielzahl von Posen-Buckets beinhaltet sind,
wobei der bestimmte Posen-Bucket mit den ersten Merkmalsdaten assoziiert ist, die mit dem zumindest einen Bild des Gesichts des Benutzers des Fahrzeugs assoziiert sind, und
wobei das Ermitteln der Übereinstimmung zwischen dem Benutzer des Fahrzeugs und dem zuvor registrierten Benutzer auf den ersten Merkmalsdaten und den ausgewählten Merkmalsdaten basiert, die mit dem zumindest einen Bild des Gesichts des zuvor registrierten Benutzers assoziiert sind.

8. Verfahren nach Anspruch 7, ferner umfassend:
Ermitteln, durch das mobile Computergerät, eines Ähnlichkeitswerts, der eine Ähnlichkeit zwischen den ersten Merkmalsdaten, die mit dem zumindest einen Bild des Gesichts des Benutzers des Fahrzeugs assoziiert sind, und den ausgewählten Merkmalsdaten, die mit dem zumindest einen Bild des Gesichts des zuvor registrierten Benutzers assoziiert sind, angibt,
wobei das Ermitteln der Übereinstimmung zwischen dem Benutzer des Fahrzeugs und dem zuvor registrierten Benutzer in Reaktion auf ein Ermitteln, dass der Ähnlichkeitswert einen Ähnlichkeitsschwellenwert erfüllt, erfolgt.

9. Verfahren nach einem der Ansprüche 1-8, wobei die zweiten Merkmalsdaten, die mit dem zumindest einen Bild des Gesichts des zuvor registrierten Benutzers assoziiert sind, eine Vielzahl von Merkmalsdaten umfassen, die mit dem zumindest einen Bild des Gesichts des zuvor registrierten Benutzers assoziiert sind, wobei das Verfahren ferner Folgendes umfasst:
Ermitteln, durch das mobile Computergerät, basierend auf den ersten Merkmalsdaten, die mit dem zumindest einen Bild des Gesichts des Benutzers des Fahrzeugs assoziiert sind, und alle Merkmalsdaten der Vielzahl von Merkmalsdaten, die mit dem zumindest einen Bild des Gesichts des zuvor registrierten Benutzers assoziiert sind, eines jeweiligen Ähnlichkeitswerts für alle Merkmalsdaten der Vielzahl von Merkmalsdaten, die mit dem zumindest einen Bild des Gesichts des zuvor registrierten Benutzers assoziiert sind, wobei jeder Ähnlichkeitswert eine Ähnlichkeit zwischen den ersten Merkmalsdaten, die mit dem zumindest einen Bild des Gesichts des Benutzers des Fahrzeugs assoziiert sind, und den jeweiligen Merkmalsdaten der Vielzahl von Merkmalsdaten, die mit dem zumindest einen Bild des Gesichts des zuvor registrierten Benutzers assoziiert sind, angibt,
wobei das Ermitteln der Übereinstimmung zwischen dem Benutzer des Fahrzeugs und dem zuvor registrierten Benutzer auf dem jeweiligen Ähnlichkeitswert für die Vielzahl von Merkmalsdaten basiert, die mit dem zumindest einen Bild des Gesichts des zuvor registrierten Benutzers assoziiert sind.

10. Verfahren nach Anspruch 9, ferner umfassend:
Ermitteln, durch das mobile Computergerät, basierend auf den jeweiligen Ähnlichkeitswerten, von am höchsten bewerteten Merkmalsdaten der Vielzahl von Merkmalsdaten, die mit dem zumindest einen Bild des Gesichts des zuvor registrierten Benutzers assoziiert sind,
wobei das Ermitteln der Übereinstimmung zwischen dem Benutzer des Fahrzeugs und dem zuvor registrierten Benutzer auf den am höchsten bewerteten Merkmalsdaten der Vielzahl von Merkmalsdaten basiert, die mit dem zumindest einen Bild des Gesichts des zuvor registrierten Benutzers assoziiert sind.

11. Verfahren nach Anspruch 9, ferner umfassend:
Ermitteln, durch das mobile Computergerät, basierend auf den Ähnlichkeitswerten für zwei oder mehr Merkmalsdaten der Vielzahl von Merkmalsdaten, die mit dem zumindest einen Bild des Gesichts des zuvor registrierten Benutzers assoziiert sind, eines zusammengesetzten Ähnlichkeitswerts,
wobei das Ermitteln der Übereinstimmung zwischen dem Benutzer des Fahrzeugs und dem zuvor registrierten Benutzer in Reaktion auf ein Ermitteln, dass der zusammengesetzte Ähnlichkeitswert einen Ähnlichkeitsschwellenwert erfüllt, erfolgt.

12. Verfahren nach Anspruch 11, wobei das Ermitteln der Übereinstimmung zwischen dem Benutzer des Fahrzeugs und dem zuvor registrierten Benutzer in Reaktion auf das Ermitteln, dass der jeweilige Ähnlichkeitswert für jeweilige von zwei oder mehr Merkmalsdaten, die mit dem zumindest einen Bild des Gesichts des zuvor registrierten Benutzers assoziiert sind, einen Ähnlichkeitsschwellenwert erfüllt, erfolgt.

13. Verfahren, umfassend:
Herstellen, durch ein Fahrzeugcomputersystem eines Fahrzeugs, einer Verbindung mit einem mobilen Computergerät, wobei das Fahrzeugcomputersystem eine Infotainment-Kopfeinheit beinhaltet;
Ermitteln, durch das Fahrzeugcomputersystem, einer Anwesenheit eines Benutzers im Inneren des Fahrzeugs;
nach dem Ermitteln der Anwesenheit des Benutzers im Inneren des Fahrzeugs, Erfassen, durch das Fahrzeugcomputersystem unter Nutzung einer Bilderfassungsvorrichtung, die mit zumindest einem Teil des Fahrzeugs verbunden ist, zumindest eines Bilds eines Gesichts des Benutzers;
Ermitteln, durch das Fahrzeugcomputersystem, erster Merkmalsdaten, die mit dem zumindest einen Bild des Gesichts des Benutzers assoziiert sind;
Senden, durch das Fahrzeugcomputersystem und an das mobile Computergerät, der ersten Merkmalsdaten, die mit dem zumindest einen Bild des Gesichts des Benutzers assoziiert sind,
Empfangen, durch das Fahrzeugcomputersystem und von dem mobilen Computergerät, von Authentifizierungsdaten für den Benutzer, wobei die Authentifizierungsdaten eine Übereinstimmung zwischen dem Benutzer und einem zuvor registrierten Benutzer basierend auf einem Vergleich zwischen den ersten Merkmalsdaten und zweiten Merkmalsdaten, die mit zumindest einem Bild eines Gesichts des zuvor registrierten Benutzers assoziiert sind, anzeigen; und
Zugreifen, durch das Fahrzeugcomputersystem und basierend auf den Authentifizierungsdaten für den Benutzer, auf Benutzerkontoinformationen, um den Benutzer in der Infotainment-Kopfeinheit anzumelden.

14. Mobiles Computergerät, umfassend:
zumindest einen Prozessor; und
zumindest ein computerlesbares Speichergerät, das Anweisungen speichert, die, bei Ausführung durch den zumindest einen Prozessor, den zumindest einen Prozessor veranlassen, das Verfahren nach einem der Ansprüche 1-12 durchzuführen.

15. Fahrzeugcomputersystem, umfassend: zumindest einen Prozessor; und zumindest ein computerlesbares Speichergerät, das Anweisungen speichert, die, bei Ausführung durch den zumindest einen Prozessor, den zumindest einen Prozessor veranlassen, das Verfahren nach Ansprüch 13 durchzuführen.

## Revendications

1. Procédé comprenant :
l'établissement, par un dispositif informatique mobile, d'une connexion avec un système informatique de véhicule d'un véhicule ;
après l'établissement de la connexion, la réception, par le dispositif informatique mobile et en provenance du système informatique de véhicule, de premières données de caractéristiques associées à au moins une image d'un visage d'un utilisateur du véhicule, dans lequel l'au moins une image du visage de l'utilisateur du véhicule est capturée par un dispositif de capture d'image connecté à au moins une partie du véhicule ;
la détermination, par le dispositif informatique mobile et sur la base d'une comparaison entre les premières données de caractéristiques et des deuxièmes données de caractéristiques associées à au moins une image d'un visage d'un utilisateur préalablement enregistré du dispositif informatique mobile, d'une correspondance entre l'utilisateur du véhicule et l'utilisateur préalablement enregistré ;
l'authentification, par le dispositif informatique mobile et sur la base de la correspondance, de l'utilisateur du véhicule ; et
l'envoi, par le dispositif informatique mobile et au système informatique de véhicule, de données d'authentification pour l'utilisateur du véhicule, dans lequel les données d'authentification indiquent la correspondance.

2. Procédé selon la revendication 1,
dans lequel le système informatique de véhicule inclut une unité centrale d'info-divertissement, et
dans lequel l'envoi, par le dispositif informatique mobile et au système informatique de véhicule, des données d'authentification pour l'utilisateur du véhicule amène le système informatique de véhicule à accéder aux informations de compte utilisateur pour ouvrir une session de l'utilisateur du véhicule dans l'unité centrale d'info-divertissement.

3. Procédé selon l'une quelconque des revendications 1 et 2, dans lequel les données d'authentification pour l'utilisateur du véhicule incluent des informations d'identification uniques associées à au moins l'un du dispositif informatique mobile ou de l'utilisateur du véhicule.

4. Procédé selon l'une quelconque des revendications 1 à 3, dans lequel l'établissement de la connexion comprend l'appariement sécurisé du dispositif informatique mobile avec le système informatique de véhicule, dans lequel le dispositif informatique mobile comprend un dispositif de confiance qui est associé à un compte utilisateur de l'utilisateur du véhicule sur le système informatique de véhicule.

5. Procédé selon l'une quelconque des revendications 1 à 4, dans lequel la réception des données de caractéristiques associées à l'au moins une image du visage de l'utilisateur du véhicule comprend, par le dispositif informatique mobile et en provenance du système informatique de véhicule, une copie chiffrée des données de caractéristiques associées à l'au moins une image du visage de l'utilisateur du véhicule.

6. Procédé selon l'une quelconque des revendications 1 à 5, dans lequel :
les deuxièmes données de caractéristiques associées à l'au moins une image du visage de l'utilisateur précédemment enregistré sont associées à au moins un vecteur de caractéristiques et sont incluses dans au moins un compartiment de pose d'une pluralité de compartiments de pose ; et
chaque compartiment de pose de la pluralité de compartiments de pose est associé à une plage respective d'angles de pas du visage de l'utilisateur précédemment enregistré et à une plage respective d'angles de lacet du visage de l'utilisateur précédemment enregistré.

7. Procédé selon la revendication 6, comprenant en outre :
la sélection, par le dispositif informatique mobile, à partir des deuxièmes données de caractéristique, de données de caractéristique incluses dans un compartiment de pose particulier de la pluralité de compartiments de pose,
dans lequel le compartiment de pose particulier est associé aux premières données de caractéristiques associées à l'au moins une image du visage de l'utilisateur du véhicule, et
dans lequel la détermination de la correspondance entre l'utilisateur du véhicule et l'utilisateur précédemment enregistré est basée sur les premières données de caractéristique et les données de caractéristique sélectionnées associées à l'au moins une image du visage de l'utilisateur précédemment enregistré.

8. Procédé selon la revendication 7, comprenant en outre :
la détermination, par le dispositif informatique mobile, d'un score de similitude indiquant une similitude entre les premières données de caractéristiques associées à l'au moins une image du visage de l'utilisateur du véhicule et les données de caractéristiques sélectionnées associées à l'au moins une image du visage de l'utilisateur précédemment enregistré,
dans lequel la détermination de la correspondance entre l'utilisateur du véhicule et l'utilisateur précédemment enregistré se produit en réponse à la détermination du fait que le score de similitude satisfait un score de similitude seuil.

9. Procédé selon l'une quelconque des revendications 1 à 8, dans lequel les deuxièmes données de caractéristiques associées à l'au moins une image du visage de l'utilisateur précédemment enregistré comprennent une pluralité de données de caractéristiques associées à l'au moins une image du visage de l'utilisateur précédemment enregistré, le procédé comprenant en outre :
la détermination, par le dispositif informatique mobile, sur la base des premières données de caractéristiques associées à l'au moins une image du visage de l'utilisateur du véhicule et de chaque donnée de caractéristique de la pluralité de données de caractéristiques associées à l'au moins une image du visage de l'utilisateur précédemment enregistré, d'un score de similitude respectif pour chaque donnée de caractéristique de la pluralité de données de caractéristiques associées à l'au moins une image du visage de l'utilisateur précédemment enregistré, dans lequel chaque score de similitude indique une similitude entre les premières données de caractéristiques associées à l'au moins une image du visage de l'utilisateur du véhicule et les données de caractéristiques respectives de la pluralité de données de caractéristiques associées à l'au moins une image du visage de l'utilisateur précédemment enregistré,
dans lequel la détermination de la correspondance entre l'utilisateur du véhicule et l'utilisateur précédemment enregistré est basée sur le score de similitude respectif pour la pluralité de données de caractéristiques associées à l'au moins une image du visage de l'utilisateur précédemment enregistré.

10. Procédé selon la revendication 9, comprenant en outre :
la détermination, par le dispositif informatique mobile, sur la base des scores de similitude respectifs, d'une donnée de caractéristique de classement le plus élevé de la pluralité de données de caractéristiques associées à l'au moins une image du visage de l'utilisateur précédemment enregistré,
dans lequel la détermination de la correspondance entre l'utilisateur du véhicule et l'utilisateur précédemment enregistré est basée sur la donnée de caractéristiques de classement le plus élevé de la pluralité de données de caractéristiques associées à l'au moins une image du visage de l'utilisateur précédemment enregistré.

11. Procédé selon la revendication 9, comprenant en outre :
la détermination, par le dispositif informatique mobile, sur la base des scores de similitude pour au moins deux données de caractéristiques de la pluralité de données de caractéristiques associées à l'au moins une image du visage de l'utilisateur précédemment enregistré, d'un score de similitude composite,
dans lequel la détermination de la correspondance entre l'utilisateur du véhicule et l'utilisateur précédemment enregistré se fait en réponse à la détermination du fait que le score de similitude composite satisfait un score de similitude seuil.

12. Procédé selon la revendication 11, dans lequel la détermination de la correspondance entre l'utilisateur du véhicule et l'utilisateur précédemment enregistré se fait en réponse à la détermination du fait que le score de similitude respectif pour chacune d'au moins deux données de caractéristiques associées à l'au moins une image du visage de l'utilisateur précédemment enregistré satisfait un score de similitude seuil.

13. Procédé comprenant :
l'établissement, par un système informatique de véhicule d'un véhicule, d'une connexion avec un dispositif informatique mobile, dans lequel le système informatique de véhicule comprend une unité centrale d'info-divertissement ;
la détermination, par le système informatique de véhicule, d'une présence d'un utilisateur à l'intérieur du véhicule ;
après la détermination de la présence de l'utilisateur à l'intérieur du véhicule, la capture, par le système informatique de véhicule à l'aide d'un dispositif de capture d'image qui est connecté à au moins une partie du véhicule, d'au moins une image d'un visage de l'utilisateur ;
la détermination, par le système informatique de véhicule, de premières données de caractéristiques associées à l'au moins une image du visage de l'utilisateur ;
l'envoi, par le système informatique de véhicule et au dispositif informatique mobile, des premières données de caractéristiques associées à l'au moins une image du visage de l'utilisateur,
la réception, par le système informatique de véhicule et en provenance du dispositif informatique mobile, de données d'authentification pour l'utilisateur, dans lequel les données d'authentification indiquent une correspondance entre l'utilisateur et un utilisateur précédemment enregistré sur la base d'une comparaison entre les premières données de caractéristiques et des deuxièmes données de caractéristiques associées à au moins une image d'un visage de l'utilisateur précédemment enregistré ; et
l'accès, par le système informatique de véhicule et sur la base des données d'authentification pour l'utilisateur, à des informations de compte utilisateur pour ouvrir une session de l'utilisateur dans l'unité centrale d'info-divertissement.

14. Dispositif informatique mobile comprenant :
au moins un processeur ; et
au moins un dispositif de stockage lisible par ordinateur stockant des instructions qui, lorsqu'elles sont exécutées par l'au moins un processeur, amènent l'au moins un processeur à exécuter le procédé selon l'une quelconque des revendications 1 à 12.

15. Système informatique de véhicule comprenant : au moins un processeur ; et au moins un dispositif de stockage lisible par ordinateur stockant des instructions qui, lorsqu'elles sont exécutées par l'au moins un processeur, amènent l'au moins un processeur à exécuter le procédé selon la revendication 13.
